# EUROPÄISCHE PATENTSCHRIFT

(11) **EP 2 914 458 B1**
(45) Veröffentlichungstag und Bekanntmachung des Hinweises auf die Patenterteilung: **07.10.2020**
(21) Anmeldenummer: 13792287.8
(22) Anmeldetag: 05.11.2013
(51) Int. Cl.: B60R 11/02, F16M 11/04, F16M 11/12

(54) **VORRICHTUNG ZUM HALTEN FLACHER IN ETWA RECHTECKIGER GERÄTE WIE TABLET-COMPUTER ODER MOBILTELEFONE IM INNENRAUM EINES KRAFTFAHRZEUGS**
DEVICE FOR RETAINING FLAT, APPROXIMATELY RECTANGULAR APPLIANCES SUCH AS TABLET COMPUTERS OR MOBILE TELEPHONES IN THE INTERIOR OF A MOTOR VEHICLE
DISPOSITIF SERVANT À RETENIR DES APPAREILS PLATS SENSIBLEMENT RECTANGULAIRES COMME DES TABLETTES ÉLECTRONIQUES OU DES TÉLÉPHONES PORTABLES DANS L'HABITACLE D'UN VÉHICULE À MOTEUR

(30) Priorität: 05.11.2012 CH 22572012; 30.11.2012 CH 26292012; 21.01.2013 CH 249132013; 06.05.2013 CH 921132013; 18.05.2013 CH 992132013; 01.06.2013 CH 10592013; 09.07.2013 CH 12332013; 21.07.2013 CH 13012013; 02.10.2013 CH 17042013
(43) Veröffentlichungstag der Anmeldung: 09.09.2015
(73) Patentinhaber: Kinetix AG, 7000 Chur (CH)
(72) Erfinder: ACKERET, Peter, CH-8048 Zuerich (CH); SKOTT, Juergen Siegfried, 72213 Altensteig (DE); KELLER, Michael Andreas, 72250 Freudenstadt (DE)
(74) Vertreter: DREISS Patentanwälte PartG mbB
(86) Internationale Anmeldenummer: PCT/EP2013/073080
(87) Internationale Veröffentlichungsnummer: WO 2014/068146

(56) Entgegenhaltungen:
- DE-A1- 10 230 643
- DE-A1-102011 075 621
- DE-A1-102011 075 621
- DE-U1- 29 708 702
- DE-U1-202011 106 677
- DE-U1-202011 107 952
- US-A- 5 751 548
- US-A1- 2006 219 857
- US-A1- 2012 006 870
- US-B1- 7 946 542

## Beschreibung

Die Erfindung betrifft einen Halter für flache in etwa rechteckige Geräte wie Tablet-Computer oder Mobiltelefone, insbesondere einen Halter für eine Vorrichtung zum Halten flacher, in etwa rechteckiger Geräte wie Tablet-Computer oder Mobiltelefone im Innenraum eines Kraftfahrzeugs, insbesondere zur Benutzung durch den Fahrer oder den Beifahrer des Fahrzeugs.

Ein Halter mit den Merkmalen des Oberbegriffs des Patentanspruchs 1 ist aus der DE 10 2011 075 621 A1 bekannt.

Die rasche Verbreitung von Tablet-Computern und Mobiltelefonen, insbesondere sogenannten "Smartphones" führt dazu, dass immer mehr auch die interne Kommunikation von Firmen über Tablet-Computer und Smartphones abgewickelt wird. Dies trifft insbesondere bei der Kommunikation zwischen den Firmenzentralen und den Mitarbeitern im Aussendienst zu.

Tablet-Computer und Smartphones ermöglichen aber auch den Empfang von zahlreichen Informations- und Unterhaltungsprogrammen, die für den Beifahrer von Interesse sind.

Für Mitfahrer auf den Rücksitzen sind oft auf der Rückseite von Fahrer- oder Beifahrersitzen angeordnete Halterungen für Tablet-Computer und Smartphones vorgesehen oder nachrüstbar.

Verschiedene neue Fahrzeuge sind teilweise mit Halterungen für Smartphones meist in verschliessbaren Ablagefächern unter der Armlehne und Tablet-Computer ähnlichen Bildschirmen am Armaturenbrett ausgestattet die eine interaktive Kommunikation ermöglichen die aber primär fahrzeug- und verkehrsrelevante Informationen für den Fahrer liefern.

Da für die Vordersitze von Fahrzeugen meist keine Ausklapptische vorgesehen sind, müssen die Tablet-Computer zur Benutzung durch den Fahrer auf den Beifahrersitz oder die Mittelarmlehne gelegt werden. Der Beifahrersitz ist jedoch oft durch eine Person besetzt oder mit anderen Gegenständen versperrt und ein flacher Platz auf der Mittelkonsole meist nur sehr eingeschränkt verfügbar. Für die Arbeiten am Tablet-Computer werden oft auch Akten benötigt was die Handhabung des Tablet-Computers zusätzlich erschwert.

Die Benutzung eines Tablet-Computers durch einen Beifahrer ist ohne Behinderung des Fahrers nur möglich, indem der Beifahrer den Tablet-Computer in den Händen hält oder auf die Beine legt, was bei längerer Benutzung sehr unbequem und im Falle eines Unfalles gefährlich sein kann.

Es sind Ständer und Halter für Tablet-Computer und Smartphones zur Verwendung durch den Fahrer von Fahrzeugen bekannt, doch sind sie oft nur umständlich zugänglich oder behindern oder verunmöglichen die Benutzung des Beifahrersitzes oder die Handhabung von Bedienelementen des Fahrzeugs oder sie verdecken Anzeigen und Lüftungsdüsen oder gefährden die Sicherheit der Fahrzeuginsassen bei Unfällen.

Aufgabe der Erfindung ist es, einen Halter für flache in etwa rechteckige Geräte wie Tablet-Computer oder Mobiltelefone zu schaffen der an unterschiedliche Abmessungen der Geräte anpassbar ist und einen optimalen Schutz vor Verletzungen der Passagiere bei Unfällen gewährleistet.

Diese Aufgabe wird durch einen Halter mit den Merkmalen des Anspruchs 1 gelöst.

Die Erfindung zeichnet sich vorzugsweise durch eine Befestigungseinrichtung zum Befestigen der Vorrichtung an einem Fahrzeugbauteil sowie einen Halter zur Aufnahme der Geräte und eine zwischen dem Halter und der Befestigungseinrichtung vorgesehenen Überführungsanordnung mit der der Halter relativ zum Fahrzeugbauteil in unterschiedliche Stellungen bewegbar ist aus, wobei die Überführungsanordnung ein an der Befestigungseinrichtung angeordnetes Stützelement mit einem ersten Drehgelenk mit einer in etwa vertikal ausgerichteten Drehachse sowie einen nahe dem oberen Ende des Stützelements angeordneten Schwenkarm mit einem zweiten Drehgelenk mit einer in etwa horizontal ausgerichteten Drehachse umfasst, der mit dem Halter verbunden ist.

Die Überführungsanordnung ermöglicht einen sehr einfachen, robusten und kompakten Aufbau der Vorrichtung mit der Möglichkeit den Halter mit dem Tablet-Computer auf kleinsten Raum in jede gewünschte Gebrauchsstellung im Hoch- oder Querformat für eine bequeme Benutzung durch den Fahrer und/oder den Beifahrer oder in eine Nichtgebrauchsstellung in der weder Fahrer noch Beifahrer oder die Bedienung des Fahrzeugs beeinträchtigt werden zu bewegen.

Vorteilhafte Ausgestaltungen der Erfindung können sich insbesondere dadurch ergeben,
- dass das Fahrzeugbauteil eine Mittelkonsole die mittig zwischen Fahrer- und Beifahrersitz angeordnet ist umfasst, und wobei das Stützelement nahe einer Seitenwand der Mittelkonsole und nahe der Instrumententafel des Kraftfahrzeugs angeordnet ist und wobei der Halte zwischen einer Aufbewahrungsstellung in der der Halter mit seiner Breitseite in etwa vertikal und parallel zur Seitenwand der Mittelkonsole ausgerichtet vom Stützelement nach hinten weist und unterschiedlichen Gebrauchsstellungen in denen der Bildschirm eines in den Halter eingesetzten Geräts in unterschiedlichen Dreh- und Neigungsstellungen um das erste und zweite Drehgelenk auf den Fahrer und den Beifahrer ausgerichtet ist, bewegbar ist;
- dass der Halter eine in etwa rechteckige Aussenkontur aufweist und wobei die Drehachse des zweiten Drehgelenks in etwa parallel zu den Längsseiten des Halters verläuft;
- dass der Halter an einer Schmalseite vorzugsweise mittig mit dem Schwenkarm verbunden ist;
- dass der Halter nahe einer Längsseite an der Schmalseite mit dem Schwenkarm verbunden ist.
- dass der Schwenkarm an einer Längsseite des Halters angeordnet ist;
- dass der Halter über einen Stützarm mit dem Schwenkarm verbunden ist;
- dass die Längsachse des Schwenkarms und die Längsachse des Stützarms in etwa senkrecht zueinander stehen;
- dass der Halter an seiner Rückwand über ein drittes Drehgelenk dessen Drehachse senkrecht zur Breitseite der Rückwand verläuft mit dem Stützarm verbunden und zwischen einer horizontalen und einer vertikalen Gebrauchslage um mindestens 90° drehbar ist;
- dass die Drehachse des dritten Drehgelenks in etwa im Schnittpunkt der beiden Diagonalen der Rückwand des Halters angeordnet ist;
- dass zwischen dem Schwenkarm und dem Stützarm ein Doppelgelenk angeordnet ist, mit einem Drehlager das mit dem Schwenkarm verbunden ist und einem Schwenklager das mit dem Stützarm verbunden ist und wobei das Drehlager um eine Drehachse dreht, welche parallel zur Drehachse des ersten Drehgelenks verläuft und das Schwenklager um eine Drehachse dreht, welche senkrecht zur Drehachse des Drehlagers verläuft;
- dass das Stützelement und der Schwenkarm ein L-förmiges Bauteil bilden an dessen einem Schenkel das erste Drehgelenk und das zweite Befestigungsmittel und an dessen anderem Schenkel das zweite Drehgelenk und der Halter angeordnet sind;
- dass der Halter in der Nichtgebrauchsstellung neben und/oder über der gegen den Beifahrersitz gerichteten Seitenwand der Mittelkonsole angeordnet ist;
- dass sich der Halter am ersten Drehgelenk aus der Nichtgebrauchsstellung beidseitig um etwa 120° bis 135° drehen lässt;
- dass die Höhe des Stützelements so bemessen ist, dass die Drehebene des Halters so hoch liegt, dass der Halter sowohl über die Beine eines Beifahrers als auch über den Schaltknauf zum Fahrer hin geschwenkt werden kann;
- dass sich der Halter um das zweite Drehgelenk 360° drehen lässt;
- dass das erste Drehgelenk und/oder das zweite Drehgelenk und/oder das dritte Drehgelenk und/oder das Doppelgelenk mit einer Friktionsbremse und/oder einer Rastvorrichtung versehen sind;
- dass Anschläge am ersten Drehgelenk vorgesehen sind, die den Drehwinkel des Schwenkarms in vorbestimmten Positionen begrenzen;
- dass Anschläge am zweiten Drehgelenk vorgesehen sind die den Schwenkwinkel des Halters in vorbestimmten Positionen begrenzen;
- dass die Höhe des Stützelements verstellbar ist;
- dass die Länge des Schwenkarms verstellbar ist;
- dass der Halter eine in etwa rechteckige Aufnahmeschale mit einer Bodenwand und vier umlaufenden Seitenwänden sowie eine an der Bodenwand angeordnete Halterung mit der die Geräte lösbar im Halter festgemacht werden können, umfasst und wobei die Halterungen an unterschiedliche Abmessungen der aufzunehmenden Geräte anpassbar sind;
- dass mehrere Halter an einem Träger angeordnet sind der mit dem Schwenkarm verbunden ist;
- dass der Träger die Form eines flachen Quaders mit zwei in etwa rechteckigen Breitseiten sowie zwei langen und zwei kurzen Seitenwänden aufweist und an einer der kurzen Seitenwänden, vorzugsweise mittig, mit dem Schwenkarm verbunden ist;
- dass der Träger am zweiten Drehlager um 360° drehbar ist und je ein Halter auf je einer der beiden Breitseiten des Trägers angeordnet ist;
- dass eine erste Aufnahmeschale mit einer Halterung für ein Mobiltelefon Teil einer ersten Gehäuseschale und eine zweite Aufnahmeschale mit einer Halterung für einen Tablet-Computer Teil einer zweiten Gehäuseschale bilden und wobei die erste Gehäuseschale und die zweite Gehäuseschale Rücken an Rücken den Träger bilden;
- dass zwischen der ersten Gehäuseschale und der zweiten Gehäuseschale eine Trägerplatte angeordnet ist mit einer Bodenwand mit zwei parallel zur Schmalseite des Trägers ausgerichteten Schieberführungen für Schieber der beiden Halterungen und einer in der Mitte der Stirnseite angeordneten Lagerbuchse zur Aufnahme des Schwenkarms;
- dass die erste Gehäuseschale nebst der ersten Aufnahmeschale mit einer Halterung für ein Mobiltelefon eine an die Aufnahmeschale angrenzende Ablageschale umfasst;
- dass die Befestigungseinrichtung ein am Fahrzeugbauteil angeordnetes erstes Befestigungsmittel und ein mit dem ersten Befestigungsmittel kuppelbares zweites Befestigungsmittel umfasst an dem das Stützelement angeordnet ist;
- dass das erste Befestigungsmittel als Aufnahmebuchse und das zweite Befestigungsmittel als Steckelement ausgebildet sind;
- dass das erste Befestigungsmittel und das zweite Befestigungsmittel mit einer manuell lösbaren Verriegelungsvorrichtung zusammengehalten werden;
- dass das Steckelement am unteren Ende des Stützelements angeordnet ist;
- dass das erste Drehgelenk zwischen dem Steckelement und dem Stützelement angeordnet ist;
- dass die Aufnahmebuchse als Einbauteil in einen Hohlraum der Mittelkonsole integriert oder als Anbauteil an der Aussenseite der Mittelkonsole angeordnet ist;
- dass die Aufnahmebuchse vertikal ausgerichtet in der Mittelkonsole angeordnet ist und wobei die Einstecköffnung für das Steckelement auf der Oberseite der Mittelkonsole, vorzugsweise nahe der gegen den Beifahrersitz gerichteten Seitenwand der Mittelkonsole, angeordnet ist;
- dass die Aufnahmebuchse horizontal ausgerichtet in der Mittelkonsole angeordnet ist und wobei die Einstecköffnung für das Steckelement an der gegen den Beifahrersitz gerichteten Seitenwand der Mittelkonsole angeordnet ist;
- dass die Aufnahmebuchse horizontal oder vertikal ausgerichtet als separates Teil auf der Aussenseite der gegen den Beifahrersitz gerichteten Seitenwand der Mittelkonsole angeordnet ist;
- dass die Einstecköffnung der Aufnahmebuchse mit einem federbeaufschlagten Klappdeckel verschlossen ist, der beim Einstecken des Steckelements verschwenkt wird und die Einstecköffnung freigibt;
- dass das Steckelement über ein Drehgelenk mit dem Stützelement verbunden ist.
- dass die Befestigungseinrichtung eine zwischen der Mittelkonsole und dem Fahrer- oder Beifahrersitz angeordnete Stütze umfasst, die mit einem Befestigungselement am Fahrzeugboden oder an einer der nahe der Mittelkonsole am Fahrzeugboden angeordneten Führungsschienen von Fahrer- oder Beifahrersitzen befestigt ist;
- dass das Befestigungselement die Führungsschiene am vorderen Ende von aussen umgreift;
- dass das Befestigungselement eine in etwa rechtwinklig zur Stütze und parallel zum Fahrzeugboden ausgerichtete L-förmige Platte mit einem ersten Abschnitt und einem zweiten Abschnitt umfasst und wobei der erste Abschnitt von vorne in die Führungsschiene eingeführt und zusammen mit der Führungsschiene am Fahrzeugboden festgeschraubt wird und der zweite Abschnitt den ersten Abschnitt mit dem Stützabschnitt der Stütze verbindet;
- dass das Befestigungselement mit dem Stützabschnitt und der Stütze ein einteiliges Stanz- Biegeteil bilden;
- dass die Stütze nahe ihrem oberen Ende mit einer Schraub- oder Klebverbindung oder mit einer Verhakung an der Mittelkonsole insbesondere an der Seitenwand der Mittelkonsole befestigt wird;
- dass die Stütze längsverschiebbare Segmente und ein Feststellelement umfasst so dass die Höhe der Stütze verstellbar ist;
- dass am oberen Ende der Stütze eine Aufnahmebuchse angeordnet ist mit der ein am Stützelement angeordnetes Steckelement koppelbar ist; und/oder
- dass die Einstecköffnung an der Oberseite der Aufnahmebuchse angeordnet und mit einem gefederten Klappdeckel verschliessbar ist.

Sämtliche der genannten Merkmale können dabei einzeln oder in beliebiger Kombination miteinander erfindungswesentlich sein.

Vorzugsweise ist ein Halter, insbesondere ein Halter einer oben beschriebenen Vorrichtung, vorgesehen, mit einer in etwa rechteckigen Aufnahmeschale mit einer Bodenwand und vier umlaufenden Seitenwänden sowie einer Halterung mit einer auf einer Seite der Aufnahmeschale angeordneten U-förmigen Aufnahmetasche die einen Rand eines in die Halterung eingesetzten Geräts umgreift und einer beweglich gelagerten gefederten Halteklammer mit einem Niederhalter der den gegenüberliegenden Rand eines in die Halterung eingesetzten Geräts überdeckt, wobei
- ein an der Bodenwand der Aufnahmeschale beweglich geführter Schieber vorgesehen ist, mit einer Bodenplatte und einer am Ende der Bodenplatte in etwa senkrecht zur Bodenplatte angeordneten Anschlagplatte,
- der Schieber soweit verstellbar ist bis die Anschlagplatte am gegenüberliegenden Rand des Geräts ansteht und in dieser Position mit einer manuell lösbaren Verriegelungsvorrichtung an der Bodenwand feststellbar ist, und
- die Halteklammer mit dem Niederhalter beweglich am Schieber geführt und mit einer Feder gegen die Anschlagplatte vorgespannt ist wobei der Niederhalter in der Endlage der Halteklammer soweit über die Anschlagplatte hinausragt dass der gegenüberliegenden Rand des Geräts überdeckt wird.

Vorteilhafte Weiterbildungen der Erfindung sind in den abhängigen Ansprüchen beschrieben, wobei sich vorteilhafte Ausgestaltungen insbesondere dadurch ergeben können,
- dass die Aufnahmetasche an einer der langen Seitenwände der Aufnahmeschale ausgebildet ist;
- dass an der Bodenplatte des Schiebers Führungsschienen angeordnet sind die in parallel zu den kurzen Seitenwänden verlaufenden Schieberführungen an der Bodenwand der Aufnahmeschale geführt sind;
- dass die Verriegelungsvorrichtung mindestens eine, vorzugsweise auf der Unterseite, an der Bodenwand der Aufnahmeschale angeordnete Zahnschiene sowie mindestens ein beweglich an der Bodenplatte des Schiebers angeordnetes Zahnsegment das mit einer Rastfeder in Eingriff mit der Zahnschiene gehalten wird umfasst und wobei das Zahnsegment mit einer an der Bodenplatte des Schiebers angeordneten Lösetaste aus der Zahnschiene bewegt und so die Verriegelung gelöst werden kann;
- dass die Zahnschiene und das Zahnsegment mit sägezahnförmigen Verzahnungen versehen sind, so dass der Schieber ohne Betätigung der Lösetaste in Richtung gegen das in die Halterung eingesetzte Gerät geschoben werden kann, während ein Verschieben des Schiebers in die Gegenrichtung erst nach betätigen der Lösetaste möglich ist;
- dass das Zahnsegment und die Lösetaste ein Verriegelungselement bilden das mit der als Blattfeder ausgebildeten Rastfeder an der Unterseite der Bodenplatte des Schiebers befestigt ist und wobei in der Bodenplatte des Schiebers eine Tastenausnehmung vorgesehen ist durch welche die Lösetaste nach oben ragt.

- dass in der Bodenwand der Aufnahmeschale zwischen den Schieberführungen eine längliche Ausnehmung für das Verriegelungselement freigespart ist;
- dass die Halteklammer eine Bodenplatte sowie eine am freien Ende der Bodenplatte in etwa senkrecht zur Bodenplatte ausgerichtete Anschlagwand mit einem in etwa parallel zur Bodenplatte ausgerichteten und gegen den Schieber weisenden Niederhalter umfasst und wobei die Bodenplatte der Halteklammer in der Bodenplatte des Schiebers längsverschiebbar geführt ist;
- dass zwischen dem Schieber und der Halteklammer eine Zugfeder angeordnet ist welche die Halteklammer soweit gegen den Schieber zieht bis die Anschlagwand der Halteklammer an der Anschlagplatte des Schiebers ansteht;
- dass an der Anschlagwand der Halteklammer eine Vertiefung vorgesehen ist, in der die Anschlagplatte des Schiebers in der Endlage der Halteklamme aufgenommen wird;
- dass der Niederhalter in der Endlage der Halteklammer die Anschlagplatte des Schiebers soweit überragt dass der Rand eines in die Halterung eingesetzten Geräts ausserhalb des Bildschirms überdeckt wird so dass das Gerät nicht aus der Halterung fallen kann und wobei zur Entnahme des Geräts aus der Halterung die Halteklammer gegen die Kraft der Zugfeder hinter die Anschlagplatte des Schiebers gezogen werden muss bis das Gerät frei ist und aus der Halterung entnommen werden kann;
- dass auf der Oberseite der Bodenplatte des Schiebers eine Hebevorrichtung angebracht ist welche ein in die Halterung eingesetztes Gerät nach dem Zurückziehen der Halteklammer mit dem Niederhalter soweit anhebt dass es bequem aus dem Schieber entnommen werden kann;
- dass die kurzen Seitenwände der Aufnahmeschalen in der die Halterungen für ein Mobiltelefon oder einen Tablet-Computer angeordnet sind seitliche Anschläge für die in die Halterungen eingesetzten Geräte bilden so dass diese nicht seitlich aus den Halterungen rutschen können;
- dass eine erste Aufnahmeschale mit einer Halterung für ein Mobiltelefon Teil einer ersten Gehäuseschale und eine zweite Aufnahmeschale mit einer Halterung für einen Tablet-Computer Teil einer zweiten Gehäuseschale bilden und wobei die erste Gehäuseschale und die zweite Gehäuseschale Rücken an Rücken einen Träger bilden der mit einer Überführungsanordnung mit einem Fahrzeugbauteil eines Kraftfahrzeuges verbunden werden kann;
- dass eine erste Aufnahmeschale mit einer Halterung für ein Mobiltelefon Teil einer ersten Gehäuseschale oder eine zweite Aufnahmeschale mit einer Halterung für einen Tablet-Computer Teil einer zweiten Gehäuseschale bilden und wobei die erste Gehäuseschale oder die zweite Gehäuseschale mit einer vorzugsweise flachen Rückwand ausgestattet ist und mit einer Überführungsanordnung mit einem Fahrzeugbauteil eines Kraftfahrzeuges verbunden werden kann;
- dass zwischen der Rückwand der zweiten Gehäuseschale und der Überführungsanordnung ein Drehgelenk angeordnet ist mit dem die Gehäuseschale zwischen Hoch- und Querformat drehbar ist;
- dass eine lösbare Kupplung vorgesehen ist mit der die Gehäuseschalen mit dem Fahrzeugbauteil verbunden werden können;
- dass die lösbare Kupplung ein mit den Gehäuseschalen direkt oder indirekt verbundenes Steckelement und eine direkt oder indirekt mit dem Fahrzeugbauteil verbundene Aufnahmebuchse umfasst;
- dass eine erste Aufnahmeschale mit einer Halterung für ein Mobiltelefon Teil einer ersten Gehäuseschale oder eine zweite Aufnahmeschale mit einer Halterung für einen Tablet-Computer Teil einer zweiten Gehäuseschale bilden und wobei die erste Gehäuseschale oder die zweite Gehäuseschale mit einer vorzugsweise flachen und mit einem ersten Kupplungselement verbundenen Rückwand ausgestattet ist und mit einem mit einem zweiten Kupplungselement ausgerüsteten Fahrzeugbauteil eines Kraftfahrzeuges lösbar gekoppelt werden kann;
- dass das erste Kupplungselement ein vorzugsweise einklappbares Steckelement und das zweite Kupplungselement eine Aufnahmebuchse umfassen; und/oder
- dass die vier umlaufenden Seitenwände der Aufnahmeschalen die Oberkanten der in die Halterung eingesetzten Geräte abdecken.

Sämtliche der genannten Merkmale können dabei einzeln oder in beliebiger Kombination miteinander erfindungswesentlich sein.

Die Überführungsanordnung weist vorzugsweise einen Schwenkarm auf der über ein erstes Drehgelenk mit einer in etwa vertikal ausgerichteten Drehachse mit der Befestigungseinrichtung und über ein zweites Drehgelenk mit einer in etwa horizontal ausgerichteten Drehachse mit dem Halter oder dem Träger verbunden ist.

Die Überführungsanordnung ermöglicht einen sehr einfachen, robusten und kompakten Aufbau der Vorrichtung mit der Möglichkeit den Halter oder den Träger mit dem Tablet-Computer und/oder dem Mobiltelefon auf kleinstem Raum in jede gewünschte Gebrauchsstellung im Hoch- oder Querformat für eine bequeme Benutzung durch den Fahrer und/oder den Beifahrer oder in eine Nichtgebrauchsstellung in der weder Fahrer noch Beifahrer oder die Bedienung des Fahrzeugs beeinträchtigt werden zu bewegen.

In einer bevorzugten Ausführungsform ist die Vorrichtung so ausgerichtet im Fahrzeug befestigt dass die Drehachse des ersten Drehgelenks in etwa vertikal verläuft und der Schwenkarm sich vorzugsweise in einer in etwa horizontal ausgerichteten Ebene drehen lässt.

Bevorzugt sind das erste Drehgelenk am unteren Ende des Stützelements zwischen dem Steckelement und dem Stützelement und das zweite Drehgelenk am Ende des Schwenkarms zwischen dem Schwenkarm und dem Halter oder dem Träger angeordnet.

In einer weiteren bevorzugten Ausführungsform weist der Halter eine in etwa rechteckige Aussenkontur auf und die Drehachse des zweiten Drehgelenks verläuft in etwa parallel zu jeweils zwei Aussenkanten des Halters, wobei der Schwenkarm nahe einer Aussenkante des Halters angeordnet und parallel zu dieser ausgerichtet ist.

In einer weiteren bevorzugten Ausführungsform ist der Halter über einen Stützarm mit dem Schwenkarm verbunden wobei die Längsachse des Schwenkarms und die Längsachse des Stützarms in etwa senkrecht zueinander stehen.

Bevorzugt sind der Stützarm und das Stützelement parallel zueinander ausgerichtet und an je einem Ende rechtwinklig mit dem Schwenkarm verbunden.

Der Halter ist vorzugsweise an seiner Rückwand über ein drittes Drehgelenk dessen Drehachse senkrecht zur Breitseite der Rückwand verläuft mit dem Stützarm verbunden und zwischen einer horizontalen und einer vertikalen Gebrauchslage um mindestens 90° drehbar, wobei die Drehachse des dritten Drehgelenks vorzugsweise in etwa im Schnittpunkt der beiden Diagonalen der Rückwand des Halters angeordnet ist.

In einer weiteren Ausführungsform ist vorgesehen dass zwischen dem Schwenkarm und dem Stützarm ein Doppelgelenk angeordnet ist mit einem Drehlager das mit dem Schwenkarm verbunden ist und einem Schwenklager das mit dem Stützarm verbunden ist, wobei das Drehlager um eine Drehachse dreht, welche parallel zur Drehachse des ersten Drehgelenks verläuft und das Schwenklager um eine Drehachse dreht, welche senkrecht zur Drehachse des Drehlagers verläuft.

In einer Weiterbildung können am ersten Drehgelenk und/oder am zweiten Drehgelenk und/oder am dritten Drehgelenk manuell lösbare Anschläge vorgesehen werden die den Drehwinkel des Stützelements oder des Schwenkarms oder des Halters in vorbestimmten Positionen begrenzen.

Bevorzugt ist die Aufnahmebuchse als Einbauteil in einen Hohlraum einer Mittelkonsole integriert oder als Anbauteil an der Aussenseite einer Mittelkonsole angeordnet.

In einer weiteren bevorzugten Ausführungsform ist die Aufnahmebuchse vertikal ausgerichtet in der Mittelkonsole angeordnet und die Einstecköffnung für das Steckelement auf der Oberseite der Mittelkonsole, vorzugsweise nahe der gegen den Beifahrersitz gerichteten Seitenwand der Mittelkonsole, angeordnet.

Alternativ kann die Aufnahmebuchse horizontal ausgerichtet in der Mittelkonsole angeordnet und die Einstecköffnung für das Steckelement an der gegen den Beifahrersitz gerichteten Seitenwand der Mittelkonsole angeordnet sein.

In einer weiteren bevorzugten Ausführungsform ist die Aufnahmebuchse horizontal oder vertikal ausgerichtet als separates Teil auf der Aussenseite der gegen den Beifahrersitz gerichteten Seitenwand der Mittelkonsole angeordnet, wobei die Aufnahmebuchse mit einer Schraub- oder Klebverbindung auf der Oberseite oder an der gegen den Beifahrersitz gerichteten Seitenwand der Mittelkonsole befestigt werden kann.

In einer weiteren bevorzugten Ausführungsform wird die Vorrichtung an einer am Fahrzeugboden befestigten Führungsschiene für einen der Fahrzeugsitze befestigt. Dazu wird vorzugsweise an dem in Fahrtrichtung vorderen Ende der neben der Mittelkonsole angeordneten Führungsschiene des Beifahrersitzes eine Stütze befestigt die zwischen der gegen den Beifahrersitz gerichteten Seitenwand der Mittelkonsole und der gegen die Mittelkonsole gerichteten Seitenwand des Beifahrersitzes in etwa vertikal nach oben ragt und an deren oberem Ende das erste Befestigungsmittel bzw. die Aufnahmebuchse angeordnet ist.

Vorzugsweise ist die Stütze einteilig aus einem Stanz-/Biegeteil aus stabilem Metallblech gefertigt und umfasst ein Befestigungselement mit einem ersten Segment das von vorne in die Führungsschiene hineinragt oder unter der Führungsschiene angeordnet ist und einem zweiten Segment das von der Führungsschiene in Richtung Mittelkonsole weist sowie ein am zweiten Segment in etwa rechtwinklig nach oben abgebogenes Stützelement wobei die Breitseiten der beiden Segmente des Befestigungselements in etwa parallel zum Fahrzeugboden und die Breitseite des Stützelements in etwa parallel zur Seitenwand der Mittelkonsole verlaufen. Am oberen Ende des Stützelements ist die oben offene Aufnahmebuchse befestigt.

In einer weiteren bevorzugten Ausführungsform wird das erste Segment des Befestigungselements mit der für die Befestigung der Führungsschiene fahrzeugseitig bereits vorhandenen Schraube gemeinsam mit der Führungsschiene am Fahrzeugboden fest geschraubt.

Vorzugsweise liegt das Stützelement konturfolgend an der Seitenwand der Mittelkonsole an und stützt sich mit einem am oberen Ende angeordneten Gummi-Pad an der Seitenwand der Mittelkonsole ab so dass Vibrationen der Stütze und den an ihr befestigten Vorrichtungen verhindert werden.

Zur Verbesserung der Stabilität der Stütze kann eine Schraube vorgesehen werden mit der das Stützelement auf Höhe des Gummi-Pads an der Seitenwand der Mittelkonsole festgeschraubt werden kann.

Alternativ könnte ein Doppelklebeband mit Schaumstoff-Zwischenlage oder eine lösbare Klettverbindung oder eine mechanische Verhakung zwischen Stützelement und Mittelkonsole vorgesehen werden.

Alternativ könnte die Stütze in gleicher Art und Weise statt an der Führungsschiene des Beifahrersitzes auch direkt am Fahrzeugboden oder an der gegen die Mittelkonsole gerichteten Seitenwand des Beifahrersitzes befestigt werden.

Analog zu den vorgängig beschriebenen An- oder Einbaumöglichkeiten des ersten Befestigungsmittels bzw. der Aufnahmebuchse zwischen der Mittelkonsole und dem Beifahrersitz können der An- oder Einbau des ersten Befestigungsmittels bzw. der Aufnahmebuchse entsprechend angepasst zwischen der Mittelkonsole und dem Fahrersitz erfolgen.

In einer weiteren bevorzugten Ausführungsform kann das erste Befestigungsmittel, bzw. die Aufnahmebuchse parallel zur Fahrtrichtung verschiebbar und in unterschiedlichen Positionen feststellbar an einem Fahrzeugteil bspw. an der Seitenwand der Mittelkonsole oder der Seitenwand eines Fahrzeugsitzes oder am Fahrzeugboden oder einer Führungsschiene für einen Fahrzeugsitz angeordnet sein.

Insbesondere in der parallel zur Fahrtrichtung und vertikal ausgerichteten Nichtgebrauchsstellung des Halters oder Trägers ist es vorteilhaft wenn der Halter oder Träger parallel zur Fahrtrichtung verschoben werden kann, beispielsweise nach hinten zwischen die Rückenlehnen von Fahrer- und Beifahrersitzen.

In einer bevorzugten Ausführungsform kann die Verschiebung des Halters zum Beispiel über eine horizontal angeordnete Schiene in der ein Schlitten mit der Vorrichtung geführt ist erfolgen.

Das erste Befestigungsmittel ist vorzugsweise über ein Kugelgelenk mit dem Fahrzeugbauteil verbunden, do dass die Drehachse des ersten Drehgelenks unabhängig von der Kontur des Fahrzeugbauteils vertikal ausgerichtet werden kann.

In einer weiteren bevorzugten Ausführungsform kann die Vorrichtung einen flachen quaderförmigen, vorzugsweise rechteckigen, Träger für mehrere Halter umfassen, der mit den beschriebenen Befestigungs- und Überführungsanordnungen aus einer vertikalen Nichtgebrauchsstellung zwischen dem Fahrer- und dem Beifahrersitz am zweiten Drehgelenk in eine horizontale oder schräg geneigte Gebrauchsstellung gedreht und am ersten Drehgelenk in jede gewünschte Position in Richtung Fahrer
oder Beifahrer geschwenkt werden kann.

Die Möglichkeit den Träger um das erste Drehgelenk zu schwenken und um das zweite Drehgelenk zu neigen ist insbesondere für die Verwendung von Tablet-Computern und Mobiltelefonen vorteilhaft, die so auf den Fahrer oder Beifahrer oder auf Personen auf den Rücksitzen ausgerichtet werden können.

Der Schwenkarm ist vorzugsweise mittig an einer der schmalen Seitenwände des Trägers angebracht wobei die Drehachse des zweiten Drehgelenks vorzugsweise parallel zu den Längskanten des Trägers verläuft.

In einer bevorzugten Weiterbildung ist der Träger 360° um das zweite Drehgelenk drehbar und vorzugsweise in den beiden vertikalen Nichtgebrauchspositionen mit einer manuell lösbaren Rastvorrichtung feststellbar. Zudem kann eine Friktionsbremse vorgesehen werden, welche den Träger in den eingestellten Positionen durch Reibung fixiert. Alternativ kann auch eine Rastvorrichtung vorgesehen werden, welche auch die Zwischenstellungen fixiert oder es kann nur eine Friktionsbremse ohne Rastpositionen vorgesehen werden.

In einer weiteren bevorzugten Ausführungsform ist der Träger beidseitig benutzbar. Dies ermöglicht die Unterbringung mehrerer Halter für unterschiedliche Geräte oder sonstige Gegenstände die auf der einen und anderen Breitseite des Trägers angeordnet sein können.

Durch drehen des Trägers um das zweite Drehgelenk kann die eine oder die andere Breitseite des Trägers nach oben und in beliebige Schräglagen gedreht und um das erste Drehlager zum Fahrer oder Beifahrer geschwenkt werden.

Die Möglichkeit den Träger um das erste Drehgelenk zu schwenken und um das zweite Drehgelenk zu neigen ist insbesondere für die Verwendung von Tablet-Computern und Mobiltelefonen vorteilhaft, die so stufenlos auf den Fahrer oder Beifahrer oder Personen auf den Rücksitzen ausgerichtet werden können.

In einer bevorzugten Weiterbildung sind auf den beiden Breitseiten des Trägers unterschiedlicher Aufnahme- und Ablageschalen für Halterungen Gegenstände oder Behälter ausgebildet.

Eine der beiden Breitseiten des Trägers kann auch als Tischplatte, vorzugsweise mit einem umlaufenden Rand, ausgebildet sein.

Auf der gegen das Stützelement gerichteten Schmalseite des Trägers kann ein Aufnahmeraum mit einer Aufnahme für den Schwenkarm vorgesehen werden.

Der Schwenkarm könnte wie beim vorgängig beschriebenen Halter für einen Tablet-Computer ausziehbar sein so dass der Abstand zwischen dem Träger und dem Stützelement variabel einstellbar ist.

Seitlich des vorzugsweise mittig im Aufnahmeraum aufgenommenen Schwenkarms können gegen aussen offene oder mit einer Abdeckung verschliessbare Hohlräume angeordnet sein, in denen beispielsweise feste oder ausklappbare Cup-Holder angeordnet sind, die von der einen oder der anderen Breitseite des Trägers zugänglich sind.

In einer weiteren bevorzugten Ausführungsform sind auf einer oder beiden Breitseiten des Trägers Halter zur Aufnahme von flachen in etwa rechteckigen Geräten wie Tablet-Computer oder Mobiltelefone angeordnet.

In einer bevorzugten Weiterbildung umfassen die Halter eine Aufnahmeschale in der eine Halterung zur Aufnahme des Geräts angeordnet ist.

In einer bevorzugten Ausführungsform ist auf einer Breitseite des Trägers eine sich in etwa über die Breite des Trägers erstreckende Aufnahmeschale vorgesehen in der ein Halter für ein Mobiltelefon angeordnet ist.

In einer bevorzugten Weiterbildung ist anschliessend an die Aufnahmeschale mit einer Halterung für ein Mobiltelefon eine Ablageschale zum Ablegen von kleineren Gegenständen oder zum Einsetzen eines separaten Behälters zum Beispiel für Esswaren oder Abfälle am Träger angeordnet.

Vorzugsweise sind die Aufnahmeschale für einen Halter eines Mobiltelefons und die Ablageschale in etwa gleich breit und gemeinsam auf einer Breitseite des Trägers nebeneinander angeordnet.

In einer weiteren bevorzugten Ausführungsform ist auf der anderen Breitseite des Trägers ein Halter mit einer sich in etwa über die Länge und Breite des Trägers erstreckende Aufnahmeschale mit einer Halterung für einen Tablet-Computer vorgesehen.

Der Benutzer kann so je nach Stellung des Trägers entweder das Mobiltelefon und die Ablageschale oder den Tablet-Computer benutzen.

In einer weiteren bevorzugten Ausführungsform können der Halter für ein Mobiltelefon und der Halter für einen Tablet-Computer nebeneinander auf einer Breitseite des Trägers angeordnet werden.

In einer weiteren bevorzugten Ausführungsform sind die Abmessungen der Aufnahmeschalen auf das jeweils grösste unterzubringende Gerät abgestimmt und die in den Aufnahmeschalen angeordneten Halterungen so ausgebildet dass sie unterschiedlich grosse Mobiltelefone respektive Tablet-Computer aufnehmen können.

Zur Anpassung an unterschiedliche Abmessungen der Geräte umfassen die Halterungen in einer weiteren bevorzugten Ausführungsform zwei relativ zueinander bewegliche Backen deren Abstand voneinander an die jeweilige Breite oder Länge eines in den Halter eingesetzten Geräts zum Beispiel mit einer Spindel oder einer Rastvorrichtung ein- und feststellbar ist so dass die beiden Backen feste Anschläge für ein zwischen den Backen eingesetztes Gerät bilden.

Im einer bevorzugten Weiterbildung ist eine der Backen als U-förmige Aufnahmetasche ausgebildet und die andere Backe mit einer beweglichen Halteklammer versehen die mit einer Feder in Richtung auf das eingesetzte Gerät vorgespannt ist und dieses soweit überdeckt, dass es in allen Lagen sicher im Halter festgehalten wird.

In einer bevorzugten Weiterbildung ist die Aufnahmetasche an einer Seitenwand der Aufnahmeschale ausgebildet.

In einer bevorzugten Weiterbildung ist eine vorzugsweise an der Halterung angeordnete Hebe-Vorrichtung vorgesehen die das Gerät nach dem Öffnen der Halteklammer soweit über den Rand der Aufnahmeschale anhebt dass es bequem erfasst und aus dem Halter entnommen werden kann.

In einer weiteren bevorzugten Ausführungsform bilden die Seitenwände der Aufnahmeschalen in denen die Halterungen angeordnet sind Anschläge für die in den Halterungen eingesetzten Geräte so dass dieses auch bei hohen Beschleunigungen wie sie bei einem Unfall auftreten können nicht seitlich aus den Halterungen rutschen können.

In einer Weiterbildung sind die Seitenränder der Aufnahmeschalen so hoch, dass die oberen Kanten der in den Halter eingesetzten Geräte abgedeckt werden, so dass bei einem Unfall keine Berührung mit den oberen Kanten der Geräte möglich ist.

In einer weiteren bevorzugten Ausführungsform sind die Halter für Mobiltelefone und Tablet-Computer identische Baugruppen mit identischen Bauteilen die in den Träger einsetzbar sind.

In einer weiteren bevorzugten Ausführungsform umfasst der Träger zwei Gehäuseschalen in denen die Aufnahmeschalen und die Ablageschale ausgebildet sind und eine zwischen den beiden Gehäuseschalen angeordnete Trägerplatte an denen die Gehäuseschalen angebracht sind.

In einer bevorzugten Weiterbildung sind eine Aufnahme für den Schwenkarm sowie Führungen für Teile der Halterungen an der Trägerplatte angeordnet.

Die eine Gehäuseschale umfasst vorzugsweise eine nach aussen offene, sich in etwa über die Breite des Trägers erstreckende, Aufnahmeschale für eine Halterung für ein Mobiltelefon sowie eine seitlich daran angrenzende Ablageschale und die andere Gehäuseschale umfasst vorzugsweise eine gegen aussen offene, sich in etwa über die Länge und Breite des Trägers erstreckende, Aufnahmeschale für eine Halterung für einen Tablet-Computer.

In einer weiteren bevorzugten Ausführungsform ist die zur Aufnahme unterschiedlich grosser Tablet-Computer vorgesehene Gehäuseschale mit einer Aufnahmeschale und einer in der Aufnahmeschale angeordneten Halterung so ausgebildet dass sie mit einer flachen Rückwand versehenen einen Halter bildet, der direkt oder mit einer Überführungsanordnung der eingangs beschriebenen Ausführungsformen an einem Fahrzeugbauteil befestigt werden kann.

In einer bevorzugten Weiterbildung ist die Rückwand des Halters mit einem Drehlager versehen, so dass der Halter zwischen einer Hochformatstellung und einer Querformatstellung drehbar ist.

In einer weiteren bevorzugten Ausführungsform ist am Träger oder Halter eine Vorrichtung zur kabellosen Übertragung - zum Beispiel durch Induktion - von Strom zum Aufladen von in den Haltern befestigten Geräten vorgesehen.

In einer weiteren bevorzugten Ausführungsform ist ein Behälter mit einer Aufnahmeschale und einem verschliessbaren Klappdeckel zur Aufnahme von insbesondere Esswaren oder Abfällen vorgesehen, der mit Zentrier- und/oder lösbaren Haltemitteln - zum Beispiel Klammern, Magneten, Schnapphaken oder dergleichen - in die am Träger angeordnete Ablageschale eingesetzt und lösbar befestigt werden kann.

Vorzugsweise wird dabei lediglich die Aufnahmeschale am Träger festgemacht und der Klappdeckel mit einem separaten lösbaren Verschluss an der Aufnahmeschale gesichert so dass der Klappdeckel auch dann geöffnet werden kann wenn die Aufnahmeschale am Träger festgemacht ist. So kann der am Träger befestigte Behälter auch dann geöffnet und zum Beispiel als Abfallbehälter benutzt werden wenn der Träger in der vertikalen Nichtgebrauchsstellung ist.

Zur Klarstellung sei noch angefügt dass sich in den beschriebenen Ausführungsformen und Anordnungen der Vorrichtung im Fahrzeug die Bezeichnungen "Fahrersitz" oder "Beifahrersitz" auf links gesteuerte Fahrzeuge beziehen bei denen der Fahrersitz in Fahrtrichtung links der Mittelkonsole und der Beifahrersitz rechts der Mittelkonsole angeordnet sind. Es handelt sich dabei um bevorzugte Ausführungsformen und Anordnungen der Vorrichtung im Fahrzeug und es versteht sich, dass die beschriebenen Ausführungsformen und Anordnungen der Vorrichtung im Fahrzeug genauso gut realisierbar sind bei Fahrzeugen bei denen der Fahrersitz in Fahrtrichtung rechts der Mittelkonsole und der Beifahrersitz links der Mittelkonsole angeordnet sind.

Ebenso versteht es sich dass die beschriebenen Ausführungsformen und Anordnungen der Vorrichtung im Fahrzeug statt zwischen der Mittelkonsole und dem Beifahrersitz auch zwischen der Mittelkonsole und dem Fahrersitz oder zur Verwendung durch Passagiere auf den Rücksitzen von Fahrzeugen realisierbar sind ohne den Rahmen der vorliegenden Erfindung zu verlassen.

Es versteht sich ferner auch, dass die vorstehend genannten und nachstehend noch zu erläuternden Merkmale nicht nur in der jeweils angegebenen Kombination sondern auch in anderen Kombinationen oder in Alleinstellung verwendbar sind ohne den Rahmen der vorliegenden Erfindung zu verlassen.

Weitere Vorteile und Ausgestaltungen der Erfindung ergeben sich aus der Beschreibung und den beiliegenden Zeichnungen.

Die Erfindung wird nachstehend anhand von bevorzugten Ausführungsbeispielen näher erläutert.
Fig. 1 zeigt eine Perspektivansicht einer ersten erfindungsgemässen Ausführungsform der Vorrichtung von hinten mit dem Halter in der Querformatstellung.
Fig. 2 zeigt eine Perspektivansicht der Vorrichtung gemäss Darstellung in Fig. 1 mit einem in den Halter eingesetzten Tablet-Computer von vorne.
Fig. 3 zeigt die Vorrichtung gemäss Darstellungen in Fig. 1 und 2, befestigt an einer Mittelkonsole eines Fahrzeugs in der Nichtgebrauchsstellung mit dem Halter am zweiten Drehgelenk vertikal nach oben geschwenkt in der Querformatstellung sowie in einer gegen den Beifahrersitz ausgerichteten Gebrauchsstellung (gestrichelt) von oben.
Fig. 4 zeigt eine Perspektivansicht der Vorrichtung in den beiden Stellungen gemäss Darstellung in Fig. 3.
Fig. 5 zeigt eine Perspektivansicht der Vorrichtung in der Nichtgebrauchsstellung gemäss Darstellungen in den Fig. 3 und 4 mit dem Halter am zweiten Drehgelenk vertikal nach unten geschwenkt in der Hochformatstellung.
Fig. 6 zeigt eine Perspektivansicht der Vorrichtung gemäss Darstellungen in Fig. 1 und Fig. 2 mit dem Halter am zweiten Drehgelenk in eine horizontale Gebrauchsstellung geschwenkt.
Fig. 7 zeigt eine Perspektivansicht der Vorrichtung gemäss Darstellungen in Fig 1 und Fig 2 mit dem Halter in einer auf den Fahrer ausgerichteten Querformatstellung.
Fig. 8 zeigt eine perspektivische Teilansicht einer Mittelkonsole in einem Fahrzeug mit einer an der Aussenseite der gegen den Beifahrersitz gerichteten Seitenwand der Mittelkonsole aufgesetzten vertikal ausgerichteten Aufnahmebuchse.
Fig. 9 zeigt eine perspektivische Teilansicht einer Mittelkonsole in einem Fahrzeug mit einer in einem Hohlraum der Mittelkonsole integrierten horizontal ausgerichteten Aufnahmebuchse mit einer an der Aussenseite der gegen den Beifahrersitz gerichteten Seitenwand der Mittelkonsole angeordneten Einstecköffnung.
Fig.10 zeigt eine Perspektivansicht der Vorrichtung gemäss Darstellungen in Fig. 1 und Fig. 2 mit umgeklapptem Steckelement in einer kompakten Aufbewahrungsstellung.
Fig.11 zeigt eine perspektivische Teilansicht der Vorrichtung mit einem längsverstellbaren Schwenkarm.
Fig.12 zeigt eine perspektivische Teilansicht der Vorrichtung mit einem plattenförmigen Schwenkarm und einem Doppelgelenk zwischen dem Schwenkarm und dem Stützelement.
Fig.13 zeigt eine perspektivische Teilansicht der Vorrichtung mit einem am ersten Drehgelenk höhenverstellbaren Schwenkarm.
Fig.14 zeigt eine perspektivische Teilansicht der Vorrichtung mit einer manuell lösbaren Verriegelungsvorrichtung zum zusammenhalten der ersten und zweiten Befestigungsmittel.
Fig. 15 zeigt eine perspektivische Ansicht einer zweiten erfindungsgemässen Ausführungsform der Vorrichtung mit dem Halter in der Querformatstellung von hinten sowie einer vertikal ausgerichteten Aufnahmebuchse.
Fig. 16 zeigt eine perspektivische Ansicht der Vorrichtung gemäss Darstellung in Fig. 15 mit einem in den Halter eingesetzten Tablet-Computer von vorne.
Fig. 17 zeigt eine erste Gebrauchsstellung der Vorrichtung gemäss Darstellungen in Fig. 15 und Fig. 16 mit dem Halter in einer Querformatstellung über der Mittelkonsole.
Fig. 18 zeigt die Gebrauchsstellung der Vorrichtung gemäss Darstellung in Fig. 17 mit dem Halter in einer Hochformatstellung.
Fig. 19 zeigt eine zweite Gebrauchsstellung der Vorrichtung gemäss Darstellungen in Fig. 15 und Fig. 16 mit dem Halter über dem Beinraum des Beifahrers in einer auf den Fahrer ausgerichteten Querformatstellung.
Fig. 20 zeigt die Gebrauchsstellung der Vorrichtung gemäss Darstellung in Fig. 19 mit dem Halter in einer Hochformatstellung.
Fig. 21 zeigt eine dritte Gebrauchsstellung der Vorrichtung gemäss Darstellungen in Fig. 15 und Fig. 16 mit dem Halter über dem Beinraum des Beifahrers in einer auf den Beifahrer ausgerichteten Querformatstellung.
Fig. 22 zeigt die Gebrauchsstellung der Vorrichtung gemäss Darstellung in Fig. 21 mit dem Halter in der Hochformatstellung.
Fig. 23 zeigt die Vorrichtung gemäss Darstellungen in Fig. 15 und Fig. 16 in einer Nichtgebrauchsstellung mit vertikal nach unten gerichtetem Halter in der Hochformatstellung neben der gegen den Beifahrer gerichteten Seitenwand der Mittelkonsole.
Fig. 24 zeigt eine Ansicht der Vorrichtung gemäss Darstellungen in Fig. 15 und Fig. 16 mit dem Halter in einer vertikal nach oben gerichteten Querformatstellung von hinten.
Fig. 25 zeigt eine Perspektivansicht der Vorrichtung gemäss Darstellung in Fig. 24 in der zusammengeklappten Aufbewahrungsstellung.
Fig. 26 zeigt eine perspektivische Teilansicht der Vorrichtung gemäss Darstellungen in Fig. 15 bis Fig. 25 mit einer Justiervorrichtung zum vertikalen Ausrichten der Drehachse des ersten Drehgelenks.
Fig. 27 zeigt einen Längsschnitt der Teilansicht der Vorrichtung gemäss Darstellung in Fig. 26.
Fig. 28 zeigt in einer Perspektivansicht eine Variante der Anbindung des Steckelements über ein Schwenkgelenk an das erste Drehgelenk.
Fig. 29 zeigt eine Explosionsansicht einer weiteren Ausführungsform der ersten und zweiten Befestigungsmittel mit einer Verriegelungsvorrichtung.
Fig. 30 zeigt eine Perspektivansicht des zusammengebauten ersten Befestigungsmittels und des zweiten Befestigungsmittels gemäss Darstellung in Fig. 29 von hinten.
Fig. 31 zeigt eine Querschnittansicht des ersten und zweiten Befestigungsmittels gemäss Darstellung in Fig. 30 in der zusammengesteckten und verriegelten Position.
Fig. 32 zeigt eine Längsschnittansicht des ersten Befestigungsmittels gemäss Darstellung in Fig. 30.
Fig. 33 zeigt eine teilweise geschnittene Seitenansicht einer horizontal in einem Fahrzeugbauteil integrierten Aufnahmebuchse gemäss Darstellung in Fig. 9 und einem am ersten Drehgelenk schwenkbar angeordneten Steckelement gemäss Darstellung in Fig. 28 das horizontal in die Aufnahmebuchse eingesteckt ist.
Fig. 34 zeigt eine Querschnittansicht einer vertikal an der gegen den Beifahrersitz gerichteten Seitenwand der Mittelkonsole angebrachten Aufnahmebuchse gemäss Darstellung in Fig. 8, die auf der Oberseite der Mittelkonsole befestigt ist.
Fig. 35 zeigt eine Perspektivansicht einer Variante einer vertikal ausgerichteten Aufnahmebuchse zum Anschrauben an der gegen den Beifahrersitz gerichteten Seitenwand einer Mittelkonsole gemäss Darstellung in Fig. 8.
Fig. 36 zeigt eine Längsschnittansicht der Aufnahmebuchse gemäss Darstellung in Fig. 35, angeschraubt an der Seitenwand einer Mittelkonsole.
Fig. 37 zeigt eine Querschnittansicht der Aufnahmebuchse gemäss Darstellung in Fig. 35, angeschraubt an der Seitenwand einer Mittelkonsole.
Fig. 38 zeigt eine Perspektivansicht einer Variante der Vorrichtung gemäss Darstellungen in den Fig. 15 und Fig. 16 mit Anschlägen zur Begrenzung der Dreh- und Schwenkbewegungen des ersten und zweiten Drehgelenks in einer Nichtgebrauchsstellung mit vertikal nach unten gerichtetem Halter in der Querformatstellung.
Fig. 39 zeigt eine Perspektivansicht der Vorrichtung gemäss Darstellung in Fig. 38 in einer gegen den Beifahrer gerichteten Querformatstellung.
Fig. 40 zeigt eine Perspektivansicht der Vorrichtung gemäss Darstellung in Fig. 38 in einer gegen den Fahrer gerichteten Querformatstellung.
Fig. 41 zeigt eine Ansicht der Vorrichtung gemäss Darstellung in Fig. 38 von oben.
Fig. 42 zeigt eine Perspektivansicht der Vorrichtung gemäss Fig. 38 ohne Aufnahmebuchse von hinten.
Fig. 43 zeigt eine teilweise geschnittene Seitenansicht der Vorrichtung von gemäss Darstellung in Fig. 41 von hinten.
Fig. 44 zeigt eine Perspektivansicht einer dritten erfindungsgemässen Ausführungsform der Vorrichtung mit vertikal nach unten gerichtetem Halter in der Querformatstellung von hinten.
Fig. 45 zeigt eine Seitenansicht der Vorrichtung gemäss Darstellung in Fig. 44.
Fig. 46 zeigt eine Perspektivansicht der Vorrichtung gemäss Darstellung in Fig. 44 mit vertikal nach oben gerichtetem Halter in der Querformatstellung von hinten.
Fig. 47 zeigt eine Seitenansicht der Vorrichtung gemäss Darstellung in Fig. 46.
Fig. 48 zeigt eine Frontansicht der Vorrichtung gemäss Darstellung in Fig. 42 mit dem Halter in einer vertikal nach unten gerichteten Stellung mit eingesetztem Tablet-Computer..
Fig. 49 zeigt eine Seitenansicht der Vorrichtung gemäss Darstellung in Fig. 48.
Fig. 50 zeigt die Frontansicht der Vorrichtung gemäss Darstellung in Fig. 48 mit dem Halter in einer vertikal nach oben gerichteten Stellung
Fig. 51 zeigt eine Seitenansicht der Vorrichtung gemäss Darstellung in Fig. 50.
Fig. 52 zeigt eine Explosionsdarstellung einer an einer Führungsschiene eines Fahrzeugsitzes angeordneten alternativen Befestigungseinrichtung.
Fig. 53 zeigt eine Perspektivansicht der Befestigungseinrichtung gemäss Darstellung in Fig. 52 in zusammengebautem Zustand mit dem Steckelement oberhalb der Aufnahmebuchse.
Fig. 54 zeigt eine Perspektivansicht einer Variante der Befestigungseinrichtung gemäss Darstellung in Fig. 52 und Fig. 53 von vorne.
Fig. 55 zeigt eine Perspektivansicht der Befestigungseinrichtung gemäss Darstellung in Fig. 54 von hinten.
Fig. 56 zeigt eine Perspektivdarstellung einer Teilansicht der Befestigungseinrichtung gemäss Darstellung in Fig. 55
Fig. 57 zeigt eine Perspektivdarstellung einer Teilansicht der Befestigungseinrichtung gemäss Darstellung in Fig. 55
Fig. 58 zeigt eine Explosionsansicht der Befestigungseinrichtung gemäss Darstellungen in den Fig. 54 bis 57.
Fig. 59 zeigt eine teilweise geschnittene Seitenansicht einer Ausführungsform der Vorrichtung mit einem plattenförmigen Träger in einer horizontal ausgerichteten Gebrauchslage.
Fig. 60 zeigt die Vorrichtung gemäss Darstellung in Fig. 59 von oben.
Fig. 61 zeigt eine Seitenansicht der Vorrichtung gemäss Darstellungen in den Fig. 59 und Fig. 60 mit dem Träger in der vertikal ausgerichteten Nichtgebrauchsstellung.
Fig. 62 zeigt eine Längsschnittansicht eines am Träger angeordneten Cup-Holders in der Nichtgebrauchsstellung.
Fig. 63 zeigt eine Längsschnittansicht des Cup-Holders gemäss Darstellung in Fig. 62 in der ausgeklappten Gebrauchsstellung.
Fig. 64 zeigt eine teilweise geschnittene Seitenansicht der Vorrichtung gemäss Darstellung in Fig. 59 mit einem in den Träger eingesetzten und mit Halteklammern am Träger befestigten Behälter.
Fig. 65 zeigt die Vorrichtung gemäss Darstellung in Fig. 64 von oben.
Fig. 66 zeigt die in einem Fahrzeug eingebaute Vorrichtung gemäss Darstellungen in den Fig. 59 bis 63 in der Nichtgebrauchsstellung in einer Ansicht von oben.
Fig. 67 zeigt die Vorrichtung gemäss Darstellung in Fig. 66 in zwei Gebrauchsstellungen in einer Ansicht von oben.
Fig. 68 zeigt eine Seitenansicht einer Variante der Vorrichtung gemäss Darstellungen in den Fig. 59 bis 67 mit einer asymmetrischen Anordnung des Schwenkarms nahe einer Längskante des Trägers mit dem Träger in der vertikal ausgerichteten Nichtgebrauchsstellung gemäss Darstellung in Fig. 61
Fig. 69 zeigt eine Variante der Befestigungseinrichtung gemäss Darstellungen in den Fig. 52 bis 58.
Fig. 70 zeigt eine Perspektivansicht der am oberen Ende der Stütze angeordneten Aufnahmebuchse gemäss Darstellung in Fig. 69 mit einem Klappdeckel zum Verschliessen der Einstecköffnung der Aufnahmebuchse in der geschlossenen Position.
Fig. 71 zeigt eine Querschnittansicht der Aufnahmebuchse gemäss Darstellung in Fig. 70 mit dem Klappdeckel in der geöffneten und der geschlossenen Position.
Fig. 72 zeigt eine Perspektivansicht einer weiteren Ausführungsform der Vorrichtung mit einem um das zweite Drehgelenk drehbaren und beidseitig verwendbaren plattenförmigen Träger in einer horizontalen gegen den Beifahrer gerichteten Gebrauchsstellung.
Fig. 73 zeigt eine Perspektivansicht des Trägers gemäss Darstellung in Fig. 72 mit einem Tablet-Computer in einer schrägen Gebrauchsstellung.
Fig. 74 zeigt eine Perspektivansicht des Trägers gemäss Darstellung in Fig. 72, 180° gedreht in einer horizontalen Gebrauchsstellung.
Fig. 75 zeigt eine Perspektivansicht des Trägers gemäss Darstellung in Fig. 74 mit einem in die schalenförmige Ausnehmung des Trägers eingesetzten Behälter mit verschlossenem Deckel.
Fig. 76 zeigt eine Perspektivansicht des Trägers gemäss Darstellung in Fig. 75 mit einem der beiden Cup-Holder mit aufgeklappter Abdeckung.
Fig. 77 zeigt eine Perspektivansicht des Trägers gemäss Darstellung in Fig. 76 mit ausgeklapptem Stützring des Cup-Holders und in den Stützring eingesetztem Becher sowie aufgeklapptem Deckel des Behälters.
Fig. 78 zeigt eine Perspektivansicht einer weiteren Ausführungsform der Vorrichtung mit einem auf einer Seite des Trägers angeordneten Halter für ein Mobiltelefon und einer schalenförmigen Ausnehmung in einer schrägen Gebrauchsstellung.
Fig. 79 zeigt eine Perspektivansicht des um 180° gedrehten Trägers gemäss Darstellung in Fig. 78 mit einem auf der Rückseite angeordneten Halter für einen Tablet-Computer.
Fig. 80 zeigt eine Ansicht des Trägers gemäss Darstellung in Fig. 78 von oben mit dem Halter ohne eingesetztes Mobiltelefon.
Fig. 81 zeigt eine Ansicht des Trägers gemäss Darstellung in Fig. 79 von oben mit dem Halter ohne eingesetzten Tablet-Computer.
Fig. 82 zeigt eine Explosionsdarstellung der Trägerplatte mit den Teilen der Halter-Baugruppe für den Taplet-Computer.
Fig. 83 zeigt eine Perspektivansicht der Trägerplatte mit dem Halter für den Tablet-Computer gemäss Darstellung in Fig. 82, in montiertem Zustand.
Fig. 84 zeigt eine Perspektivansicht der Trägerplatte mit dem Halter für den Tablet-Computer gemäss Darstellung in Fig. 83 mit aufgesetzten Gehäuseschalen und dem Schieber der Halterung in der Maximalposition.
Fig. 85 zeigt eine Perspektivansicht des Trägers gemäss Darstellung in Fig. 84 mit dem Schieber der Halterung für den Tablet-Computer in der Minimalposition.
Fig. 86 zeigt eine Perspektivansicht des Trägers mit einer Explosionsansicht von Schwenkarm, Drehsäule und Steckelement sowie mit dem ersten und dem zweiten Drehgelenk.
Fig. 87 zeigt eine Perspektivansicht einer weiteren Ausführungsform der Vorrichtung mit einer Kombination von der in den Fig. 79, 81, 82, 83 und 85 dargestellten Gehäuseschale mit einem Halter für unterschiedlich grosse Tablet-Computer, abgedeckt mit einer flachen mit einem Drehgelenk versehenen Rückwand und angeordnet an einer Überführungsanordnung gemäss Darstellung in Fig. 15 von hinten.
Fig. 88 zeigt eine Perspektivansicht der Ausführungsform gemäss Darstellung in Fig. 87 von vorne.

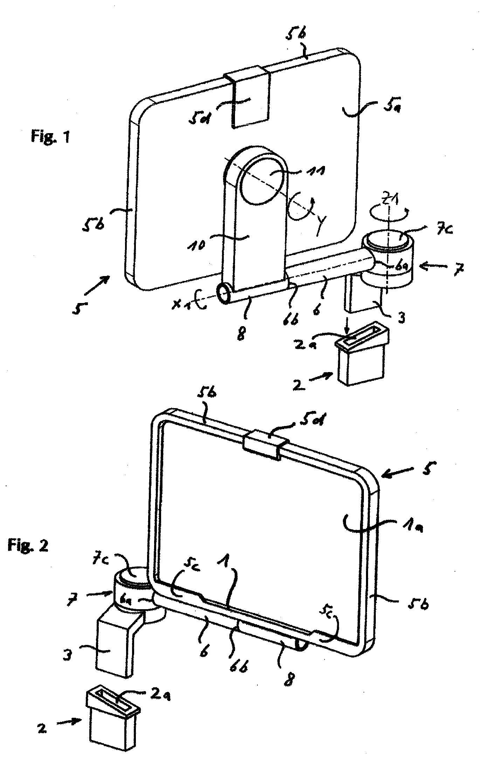

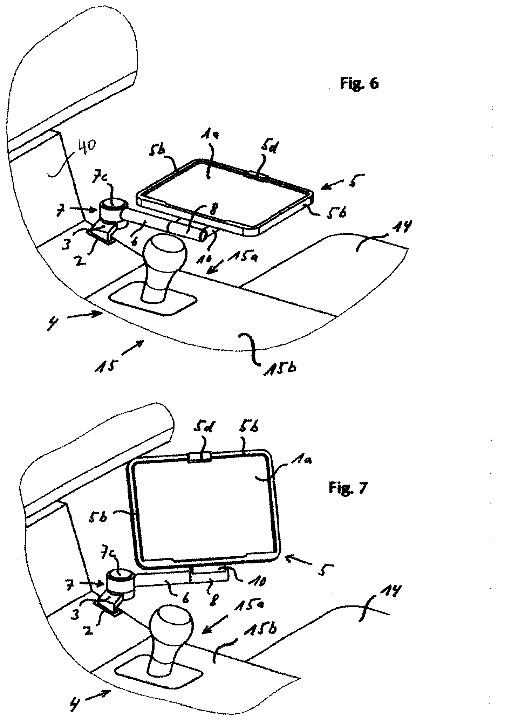

Fig. 1 bis 7 und Fig. 10 zeigen eine erste Ausführungsform der Vorrichtung. Der Schwenkarm 6 ist rohrförmig ausgebildet und horizontal ausgerichtet. Am Ende 6a des Schwenkarms 6 ist das erste Drehgelenk 7 angeordnet dessen Drehachse z1 vertikal ausgerichtet ist.

Auf der Unterseite des Drehgelenks 7 ist das Steckelement 3 angeordnet welches vertikal in die Einstecköffnung 2a einer in einem Fahrzeugbauteil 15 angeordneten Aufnahmebuchse 2 gesteckt werden kann.

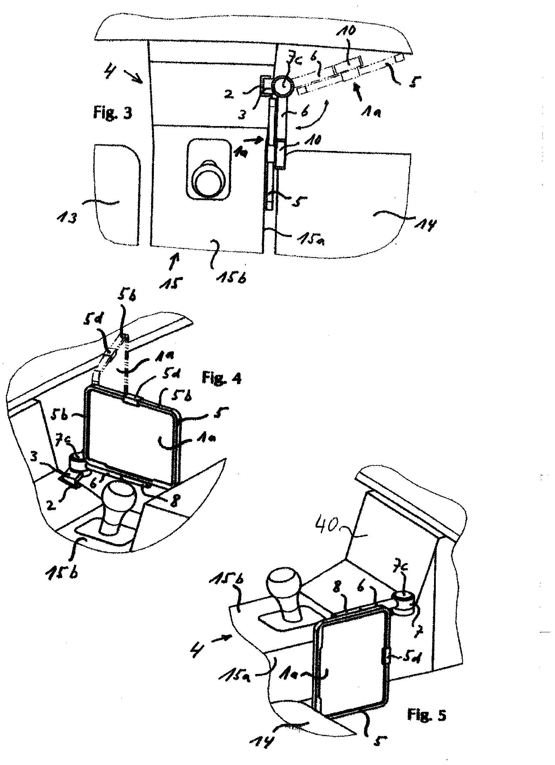

Die Aufnahmebuchse 2 ist in einem Hohlraum der Mittelkonsole 15 integriert und die Einstecköffnung 2a fluchtet in etwa mit der Oberseite 15b der Mittelkonsole 15 (Fig. 3 bis Fig. 7)

Auf der Oberseite des Drehgelenks 7 ist ein Löseknopf 7c angebracht mit dem eine formschlüssige Rastvorrichtung für den Schwenkarm 6 am Drehgelenk 7 gelöst werden kann.

Am anderen Ende 6b des Schwenkarms 6 ist das zweite Drehgelenk 8 angeordnet, das als rohrförmiger Fortsatz des Schwenkarms ausgebildet ist und dessen Drehachse x1 parallel zur Längsachse des Schwenkarms 6 verläuft.

Quer zum Schwenkarm 6 ist ein plattenförmiger Stützarm 10 am zweiten Drehgelenk 8 angeordnet. Die Längsachsen von Schwenkarm 6 und Stützarm 10 stehen senkrecht zueinander.

Am oberen Ende des Stützarms 10 ist der Halter 5 für einen Tablet-Computer 1 über das dritte Drehgelenk 11 mit dem Stützarm 10 verbunden.

Die Drehachse y des dritten Drehgelenks steht senkrecht zur Rückwand 5a des Halters 5 und ist im Schnittpunkt der Diagonalen der Rückwand 5a angeordnet so dass der Halter 5 360° zwischen gerasteten Hoch- und Querformat-Stellungen drehbar ist.

Somit lässt sich der Halter 5 mit dem ersten Drehgelenk 7 um eine vertikale Achse Z1 aus einer Aufbewahrungsstellung (Fig. 3 und Fig. 5) in verschiedene Gebrauchsstellungen für den Fahrer oder Beifahrer drehen (Fig. 3, Fig. 4, Fig. 7) sowie mit dem zweiten Drehgelenk 8 um eine horizontale Achse X1 schwenken (Fig. 5, Fig. 6, Fig. 7) und mit dem dritten Drehlager 11 zwischen Hoch- und Querformat drehen (Fig. 5).

An den Rändern der Rückwand 5a des Halters 5 ist eine umlaufende Umrandung 5b vorgesehen, die den in den Halter 5 eingesetzten Tablet-Computer 1 seitlich abstützen und die Kanten des Bildschirms 1a abdecken

Der Tablet-Computer 1 wird von vorne (Fig. 2) in den Halter 5 eingesetzt. Dazu wird die untere Kante des Tablet-Computers 1 in die beiden Aufnahmetaschen 5c eingeführt und der Tablet-Computer 1 in den Halter 5 eingeschwenkt bis die gefederte Halteklammer 5d den oberen Rand des Tablet-Computers 1 übergreift. Zur Entnahme des Tablet-Computers 1 wir die Halteklammer 5d gegen die Federkraft parallel zur Breiseite des Bildschirms 1a nach aussen gedrückt.

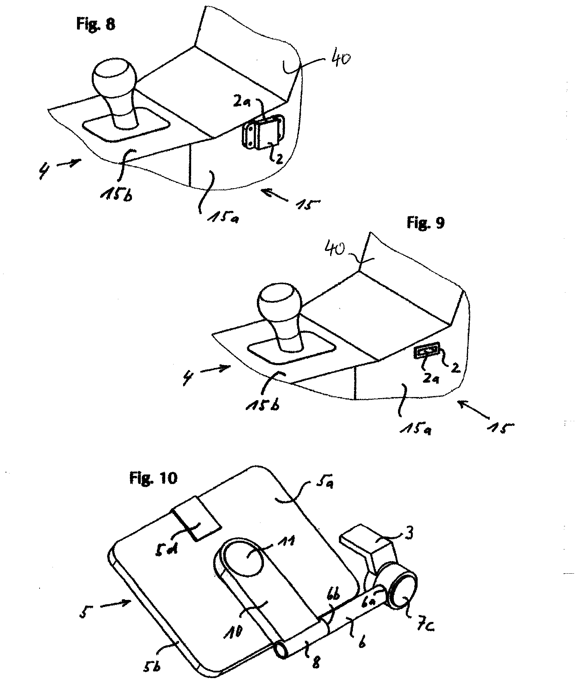

Fig. 8 und Fig. 9 zeigen zwei Varianten von Aufnahmebuchsen 2 die an der gegen den Beifahrersitz 14 gerichteten Seitenwand 15a der Mittelkonsole 15 angeordnet sind. Fig. 8 zeigt eine an die Seitenwand 15a der Mittelkonsole 15 festgeschraubte

Aufnahmebuchse 2 mit einer oben angeordneten Einstecköffnung 2a, in die das Steckelement 3 vertikal eingesteckt werden kann.

Fig. 9 zeigt eine in einem Hohlraum der Mittelkonsole 15 integrierte Aufnahmebuchse 2 deren Einstecköffnung 2a an der Seitenwand 15a der Mittelkonsole 15 angeordnet ist, so dass das Steckelement 3 horizontal eingesteckt werden kann.

Zur kompakten Aufbewahrung der Vorrichtung können der Halter 5 und das Steckelement 3 um das zweite Drehgelenk 8 soweit gegeneinander verdreht werden, bis der Halter 5 und das Steckelement 3 über- bzw. nebeneinander liegen (Fig. 10).

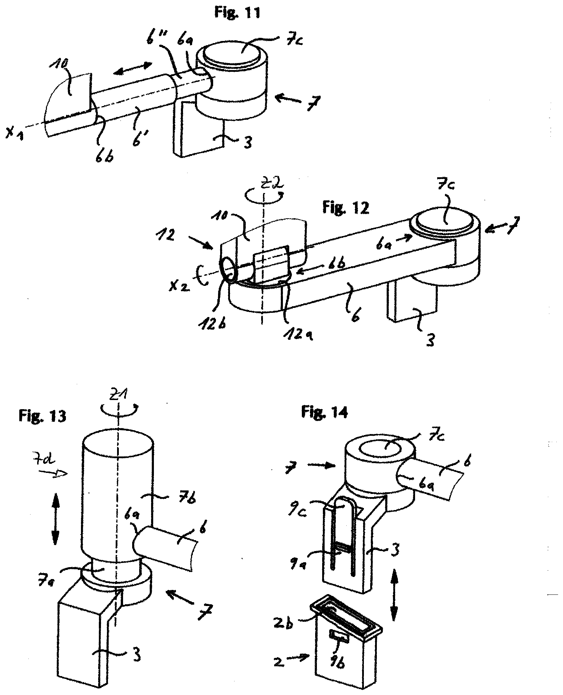

Fig. 11 bis 13 zeigen Varianten der Überführungsanordnung.

Dabei zeigt Fig. 11 einen in der Länge verstellbaren Schwenkarm 6. Anstelle eines festen Rohrs 6 werden zwei Rohrabschnitte 6' und 6" teleskopisch ineinander geführt und können in der gewünschten Auszugslänge fixiert werden (nicht dargestellt).

Fig. 12 zeigt einen plattenförmigen Schwenkarm 6 an dem anstelle des zweiten Drehgelenks 8 ein Doppelgelenk 12 vorgesehen ist, über welches der Stützarm 10 mit dem Schwenkarm 6 verbunden ist. Das Doppelgelenk 12 umfasst das Drehlager 12a das mit dem Schwenkarm 6 verbunden ist und das Schwenklager 12b das mit dem Stützarm 10 verbunden ist. Das Drehlager 12 a dreht um die Drehachse z2 welche parallel zur Drehachse z1 des ersten Drehgelenks 7 vertikal verläuft und das Schwenklager 12b dreht um die Drehachse x2 welche senkrecht zur Drehachse z2 des Drehlagers 12a verläuft.

Fig. 13 zeigt ein höhenverstellbares Stützelement 7d. Am oberen Ende des Steckelements 3 ist ein vertikal ausgerichteter Lagerzapfen 7a angeordnet der mit einer am Ende 6a des Schwenkarms 6 angeordnete Lagehülse 7b das Drehgelenk 7 bildet. Durch axiale Verschiebung der Lagerhülse 7b auf dem Lagerzapfen 7a kann die Höhe der Ebene in der sich der Schwenkarm 6 dreht verändert werden. Die Lagerhülse 7b kann über Friktion oder eine lösbare Rastvorrichtung (nicht dargestellt) in der gewünschten Position am Lagerzapfen 7a fixiert werden.

Fig. 14 zeigt eine Verriegelungsvorrichtung 9a, 9b, 9c, mit der das Steckelement 3 in der Aufnahmebuchse 2 lösbar verriegelt werden kann. Dabei ist am Steckelement 3 eine Federzunge 9c vorgesehen die mit einem Rasthaken 9a versehen ist der in eine an der Seitenwand der Aufnahmebuchse 2 angebrachte Ausnehmung 9b einschnappt wenn das Steckelement vollständig in die Aufnahmebuchse eingesteckt ist. Zum Lösen der Verriegelungsvorrichtung 9a, 9b, 9c kann die Federzunge 9c soweit in Richtung gegen das erste Drehgelenk 7 gedrückt werden, bis sich der Rasthaken 9a löst und das Steckelement 3 aus der Aufnahmebuchse 2 gezogen werden kann.

Die Einstecköffnung 2a der Aufnahmebuchse 2 ist mit einem Klappdeckel 2b verschlossen, so dass die Aufnahmebuchse 2 nicht verschmutzen kann. Beim Einstecken des Steckelements 3 wird der Klappdeckel 2b in einen Hohlraum zur Seite verschwenkt so dass das Steckelement in die Aufnahmebuchse 2 gesteckt werden kann.

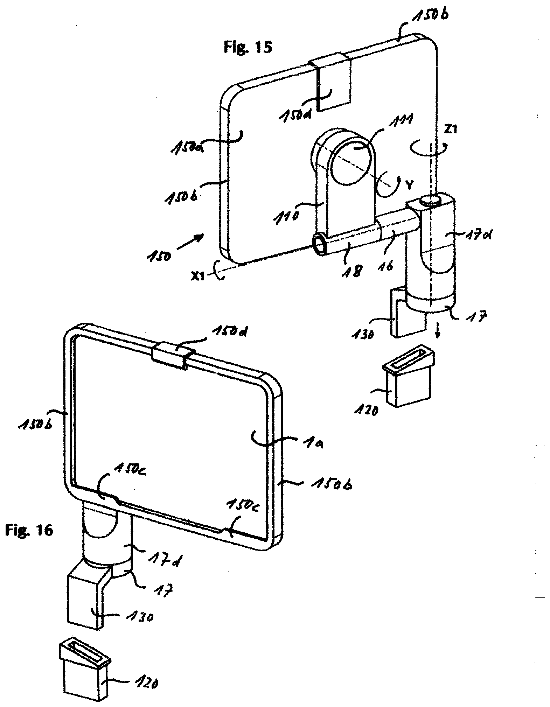

Fig. 15 bis 25 zeigen eine zweite Ausführungsform der Vorrichtung. An dem am Steckelement 130 angeordneten ersten Drehgelenk 17 ist ein sich vertikal nach oben erstreckendes Stützelement 17d vorgesehen an dessen oberem Ende der Schwenkarm 16 mit dem zweiten Drehgelenk 18 rechtwinklig angeordnet ist. Am zweiten Drehgelenk 18 ist der Stützarm 110 angeordnet an dessen oberem Ende der Halter 150 mit dem dritten Drehgelenk 111 drehbar befestigt ist.

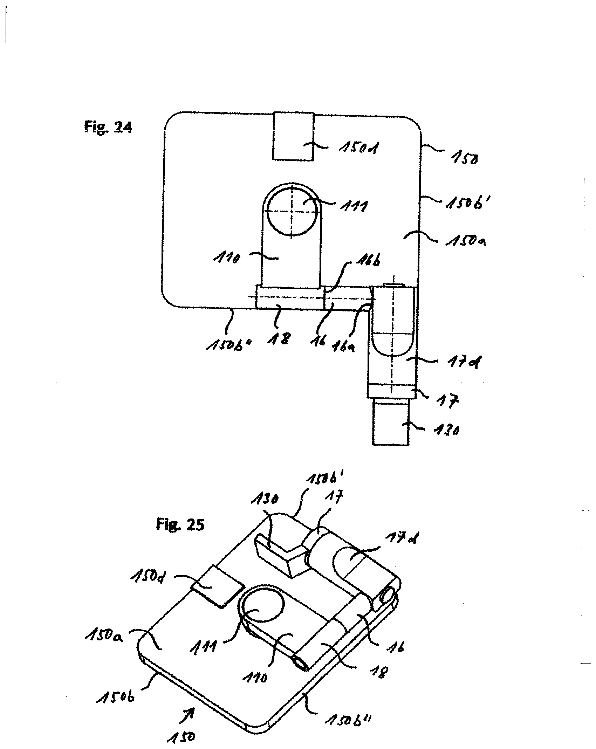

Liegen der Halter 150, der Stützarm 110, der Schwenkarm 16 mit den zweiten Drehgelenk 18 und das Stützelement 17d in zueinander parallelen Ebenen und ist der Halter 150 ins Querformat gedreht fluchten die äussere Kontur des Stützelements 17d in etwa mit dem kurzen Seitenrand 150 b' des Halters 150 und die äussere Kontur des Schwenkarms 16 mit dem zweiten Drehgelenk 18 in etwa mit dem langen Seitenrand 150b" des Halters 150 (Fig. 24).

In der zusammengeklappten Aufbewahrungsstellung liegen das Stützarm110, der Schwenkarm 16 mit dem zweiten Drehgelenk 18, das Stützelement 17d und das

Steckelement 130 in etwa parallel zu den Seitenrändern 150b' und 150b" ausgerichtet innerhalb der Aussenkonturen des Halters 150 (Fig. 25).

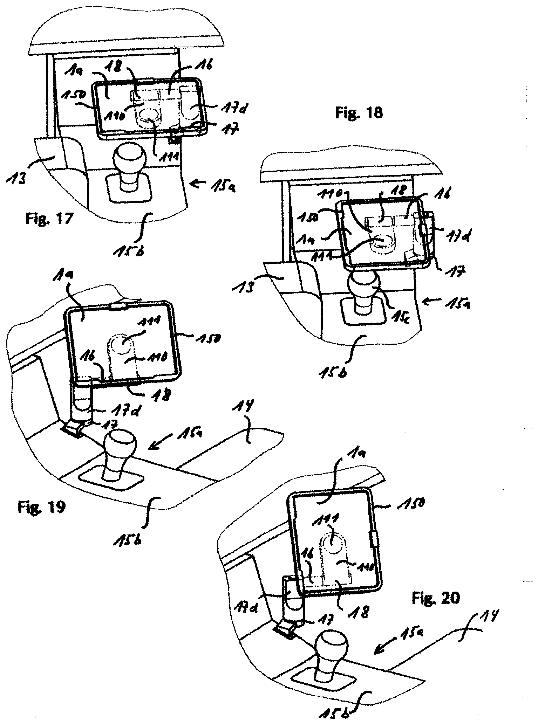

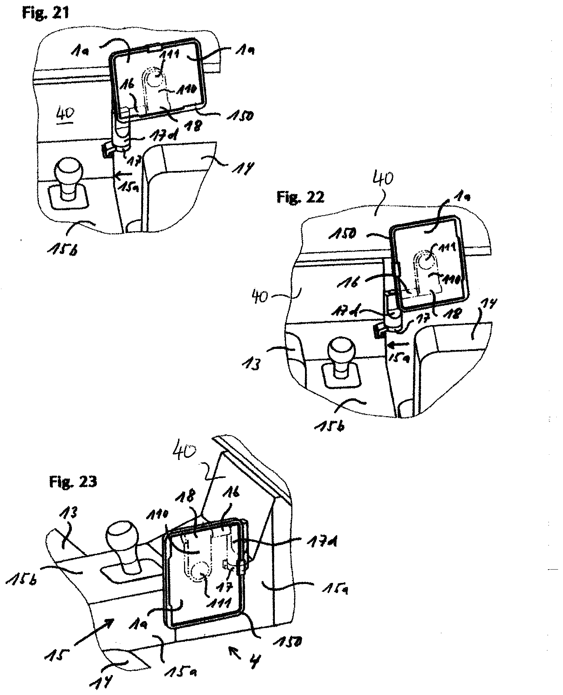

Die Höhe des Stützelements 17d ist so bemessen dass die Drehebene des Schwenkarms 16 so hoch liegt, dass der Halter 150 sowohl über die Beine eines Beifahrers (Fig. 21) als auch über den Schaltknauf 15c (Fig. 18) zum Fahrer geschwenkt werden kann.

In den Fig. 17 bis 20 werden verschiedene Gebrauchsstellungen des Halters 150 für die Benutzung durch den Fahrer und in den Fig. 21 und 22 für die Benutzung durch den Beifahrer gezeigt. Fig. 17, 19 und 21 zeigen den Halter 150 im Querformat. Fig. 18, 20 und 22 zeigen den Halter 150 im Hochformat.

Fig. 23 zeigt den Halter 150 in einer parallel zur Seitenwand 15a der Mittelkonsole 15 ausgerichteten Nichtgebrauchsstellung im Hochformat.

In den Fig. 17 bis 23 sind mit gestrichelten Linien die jeweiligen Stellungen des ersten Drehgelenks 17, des Stützelements 17d, des Schwenkarms 16, des zweiten Drehgelenks 18, des Stützarms 110 und des dritten Drehgelenks 111 dargestellt.

Die in den Figuren 17 bis 23 gezeigten Stellungen des Halters 150 sind willkürlich gewählt und Zwischenstellungen von den Drehschritten einer Rastvorrichtungen abhängig. Bei Verwendung von Friktionsscharnieren sind beliebige Zwischenstellungen möglich.

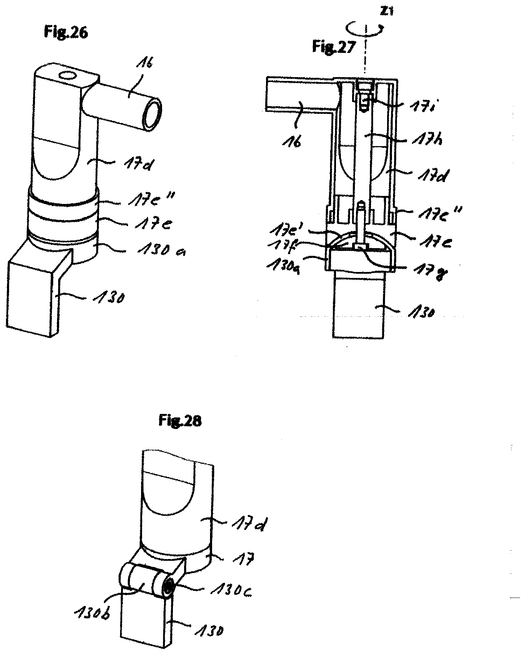

Fig. 26 und Fig.27 zeigen eine Justiervorrichtung zum vertikalen Ausrichten der Drehachse z1 des ersten Drehgelenks 17.

Die Konturen der Seitenwände 15a von Mittelkonsolen 15 an denen die Aufnahmebuchse 120 angebracht wird (Fig. 8) verlaufen oft nicht vertikal. Zudem wird eine nachträglich angebrachte Aufnahmebuchse 2, 120 ohne Zuhilfenahme einer Wasserwaage oft schräg montiert, so dass die Drehebene des Schwenkarms 6, 16 nicht horizontal verläuft.

Dies kann mit einem zwischen dem Steckelement 130 und dem ersten Drehgelenk 17 angeordneten manuell einstellbaren Kugelgelenk 130a, 17e, 17e', 17f, 17g ausgeglichen werden.

Am unteren Ende des Stützelements17d ist ein Schwenklager 17e angeordnet das über das Drehlager 17e" mit dem Stützelement 17d verbunden ist und das erste Drehgelenk 7,17 bildet.

Am oberen Ende des Steckelements 130 ist eine Kugelkopf-Haube 130a angebracht die gemeinsam mit der auf der unteren Seite des Schwenklagers 17e angeordneten Kugelpfanne 17e' das Kugelgelenk 130a, 17e' bildet.

Im Zentrum des Stützelements 17d ist eine Distanzhülse 17h angeordnet die sich auf dem Schwenklager 17e abstützt und an beiden Enden mit Innengewinden versehen ist.

Auf der Innenseite der Kugelkopf-Haube 130a ist eine Andruckkappe 17f vorgesehen, die mit der Spannschraube 17g in das untere Gewinde der Distanzhülse 17h eingeschraubt wird und die Kugelkopf-Haube 130a gegen die Kugelpfanne 17e' am Schwenklager 17e vorgespannt.

Durch Lösen der Spannschraube 17g kann das Stützelement 17d vertikal ausgerichtet und durch festziehen der Spannschraube 17g in dieser Lage fixiert werden.

Das Stützelement 17d wird mit der Bundschraube 17i, die in das obere Gewinde der Distanzhülse 17h eingeschraubt wird, gegen axiale Verschiebung gesichert, bleibt aber zusammen mit dem Schwenkarm 16 drehbar.

Fig. 28 zeigt eine vereinfachte Variante einer Justiervorrichtung zum vertikalen Ausrichten der Drehachse z1 des ersten Drehgelenks 17 in einer Achse. Am unteren Ende des Stützelements 17d ist das Drehgelenk 17 angeordnet das über das Schwenkgelenk 130b mit dem Steckelement 130 verbunden ist. Durch Lösen der Feststellschraube 130c lässt sich das Stützelement 17d um eine Achse ausrichten und durch Festziehen der Feststellschraube 130b fixieren. Zur platzsparenden Aufbewahrung der Vorrichtung kann das Steckelement 130 umgeklappt und an das Stützelement 17d angelegt werden.

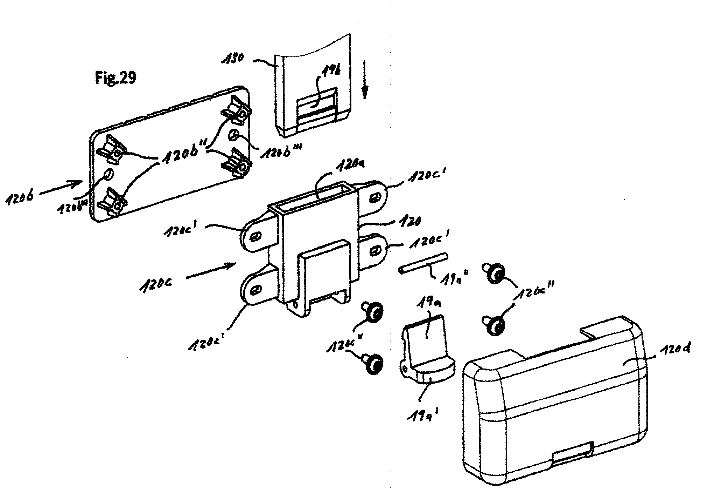

Fig. 29 bis 31 zeigen eine weitere Ausführungsform der ersten und zweiten Befestigungsmittel 120, 130 mit einer Verriegelungsvorrichtung 19a, 19a', 19a", 19b.

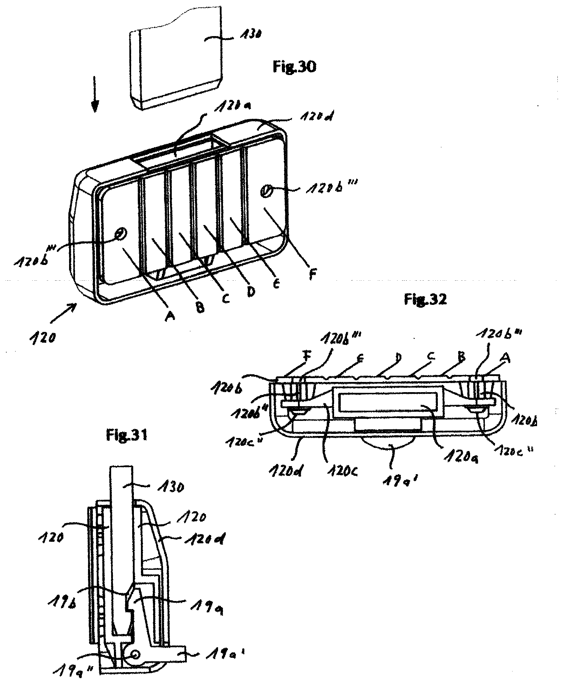

Das erste Befestigungsmittel 120 umfasst eine Grundplatte 120b, die durch parallel angeordnete V-förmige Verdünnungskanäle in die Lamellen A bis F unterteilt ist (Fig. 30 und Fig. 31). Die Verdünnungskanäle haben die Funktion von Filmscharnieren, so dass die Grundplatte 120b auch auf gewölbten Flächen, wie beispielsweise eine Seitenwand 15a einer Mittelkonsolen 15 (Fig. 8) durch Kleben oder Schrauben befestigt werden kann. Zum Festschrauben sind an den äusseren Lamellen A und F Schraubenlöcher 120b''' vorgesehen.

Ebenfalls an den beiden äusseren Lamellen A und F sind je zwei Dome 120b" vorgesehen an denen die Zwischenplatte 120c, welche die Aufnahmebuchse 120 umfasst, an den Befestigungsarmen 120c' mit den Schrauben 120c" befestigt wird.

Zwischen der Grundplatte 120b und der Aufnahmebuchse 120 ist ein Freiraum vorgesehen (Fig. 32) in den sich die Grundplatte 120b beim Befestigen an gewölbten Flächen wölben kann.

An der Zwischenplatte 120c ist auch die Verriegelungsvorrichtung 19a, 19a', 19a" angeordnet. Sie umfasst den L-förmigen Rasthaken 19a mit der Lösetaste 19a' der mit der Schwenkachse 19a" drehbar in einer auf der Breiseite der Aufnahmebuchse 120 angeordneten Auskragung gelagert und mit einer (nicht dargestellten) Feder so vorgespannt ist, dass der Rasthaken 19a in die Ausnehmung 19b am Steckelement 130e einschnappt und das Steckelement 130 in der Aufnahmebuchse 120 verriegelt (Fig. 31). Durch Hinunterdrücken der Lösetaste 19a' wird die Verriegelung gelöst und das Steckelement 130 kann aus der Aufnahmebuchse 120 herausgezogen werden.

Zum Abdecken der Zwischenplatte 120c ist eine Abdeckhaube120d vorgesehen.

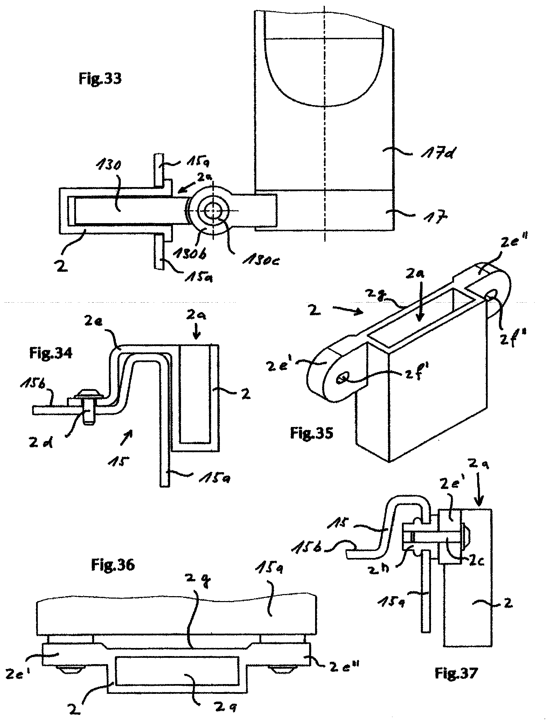

Fig. 33 zeigt ein Stützelement17d an dessen unterem Ende das erste Drehlager 17 angeordnet ist. Das Steckelement 130 ist über das Schwenkgelenk 130b mit dem ersten Drehlager 17 verbunden und kann mit der Feststellschraube 130c in den gewünschten Stellungen fixiert werden. Dargestellt ist eine horizontale Stellung in der das Steckelement in eine horizontal ausgerichtete Aufnahmebuchse 2 eingesteckt ist, deren Einstecköffnung 2a an der Aussenwand 15a einer Mittelkonsole 15 angeordnet ist (Fig. 9).

Fig. 34 zeigt eine weitere Variant einer Aufnahmebuchse 2, die an der Seitenwand 15a einer Mittelkonsole 15 angeordnet und mit dem Befestigungsarm 2e und der Befestigungsschraube 2d auf der Oberseite 15b der Mittelkonsole 15 befestigt ist.

Fig. 35 bis Fig. 37 zeigen eine weitere Variante einer an der Seitenwand 15a einer Mittelkonsole 15 vertikal ausgerichteten Aufnahmebuchse 2 mit einer oben angeordneten Einstecköffnung 2a. An den schmalen Seitenwänden der Aufnahmebuchse 2 sind seitliche Befestigungsarme 2e', 2e" angebracht, die mit Langlöchern 2f', 2f" für die Blindnietschrauben 2c versehen sind, mit denen die Aufnahmebuchse 2 mit Blindnietmuttern 2h an der Seitenwand 15a befestigt wird (Fig. 37).

An der gegen die Seitenwand 15a gerichteten Breitseite der Aufnahmebuchse 2 ist eine Aussparung 2g vorgesehen, damit die Aufnahmebuchse 2 auch an gewölbten Seitenwänden 15a spannungsfrei festgeschraubt werden kann, wozu auch die Langlöcher 2f', 2f" vorgesehen sind in denen sich die Schrauben 2c leicht schräg stellen können.

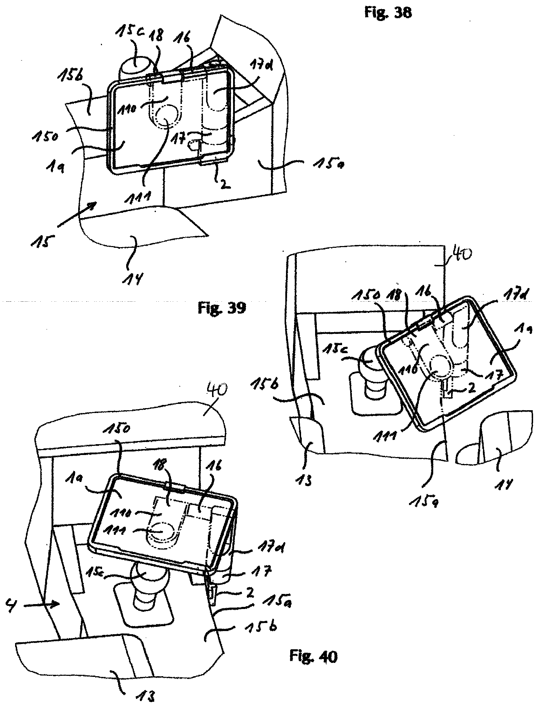

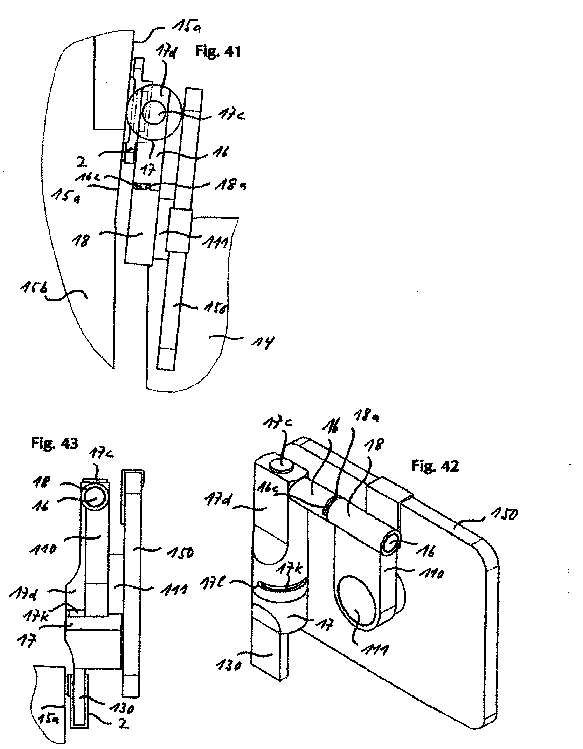

Fig. 38 bis Fig. 43 zeigen eine Variante der Vorrichtung die sich von der in den Fig. 15 und 16 gezeigten Ausführungsform dadurch unterscheidet, dass ein am ersten Drehgelenk 17 angeordneter Anschlagsnocken 17l und ein an der Aussenwand des Stützelements 17d horizontal angeordneter Anschlagsschlitz 17k in dem sich der Anschlagsnocken 17l dreht Anschläge bilden, die den Drehwinkel des Stützelements 17d und damit des Schwenkarms 16, des Stützarms 110 und des Halters 150 auf etwa 120° bis 135° begrenzen, so dass der Halter 150 aus den Nichtgebrauchsstellung nur im Uhrzeigersinn in Richtung Mittelkonsole 15 in etwa 120° bis 135°gedreht werden kann (Fig. 42)

Nach dem gleichen Prinzip ist am zweiten Drehgelenk 18 ein Anschlagsnocken 18a und am Schwenkarm 16 eine Anschlagsausnehmung 16c vorgesehen die den Schwenkwinkel des zweiten Drehgelenks 18 und damit des Stützarms 110 und des Halters 150 auf etwa 90° begrenzen, so dass der Halter 150 aus einer vertikal nach unten gerichteten Nichtgebrauchsstellung etwa 90° in eine horizontale Gebrauchsstellung geschwenkt werden kann (Fig. 42).

Mit diesen Einschränkungen der Dreh- und Schwenkbewegungen des Halters 150 kann sichergestellt werden dass der Tablet-Computer 1 aus der vertikal nach unten gerichteten Nichtgebrauchsstellung (Fig. 38) in schräge Gebrauchsstellungen sowohl für den Beifahrer (Fig. 39) als auch auf den Fahrer (Fig. 40) ausgerichtet werden kann, ohne dabei den Halter 150 soweit in den Beifahrerraum zu schwenken dass bei bestimmten Fahrzeugen Behinderungen bei der Entfaltung des Beifahrer-Airbags auftreten könnten.

Der Halter 150 bewegt sich bei dieser Ausführungsform zwischen der Nichtgebrauchsstellung und den Gebrauchsstellungen für Fahrer und Beifahrer im Wesentlichen über der Mittelkonsole 15 so dass auch keine Behinderungen des Beifahrers erfolgen. Zudem ermöglicht diese Anordnung ein sehr einfaches und schnelles Verstellen des Halters 150.

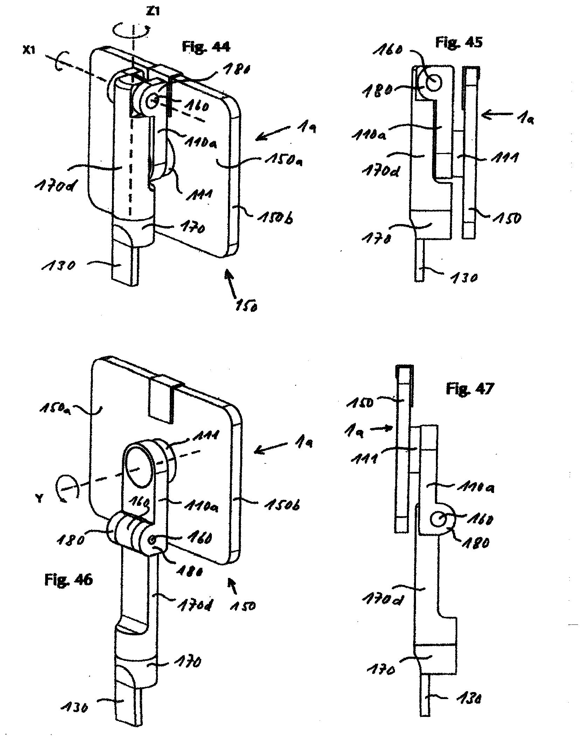

Fig. 44 bis Fig. 47 zeigen eine weitere besonders kompakte und stabile Ausführungsform der Vorrichtung. Der Schwenkarm 160 ist am oberen Ende des Stützelements 170d angeordnet und das zweite Drehlager 180 gabelförmig am Schwenkarm 160 gelagert wobei das Stützelement 170d und der Stützarm 110a in etwa fluchten. Die Drehung des Halters 150 um das erste Drehgelenk 170 erfolgt so auf einem Kreisbogen mit kleinerem Radius was bei engen Raumverhältnissen im Fahrzeug vorteilhaft sein kann. Figuren 44 und 45 zeigen die Vorrichtung mit vertikal nach unten gerichtetem Halter 150 und Figuren 46 und 47 zeigen die Vorrichtung mit vertikal nach oben gerichtetem Halter 150.

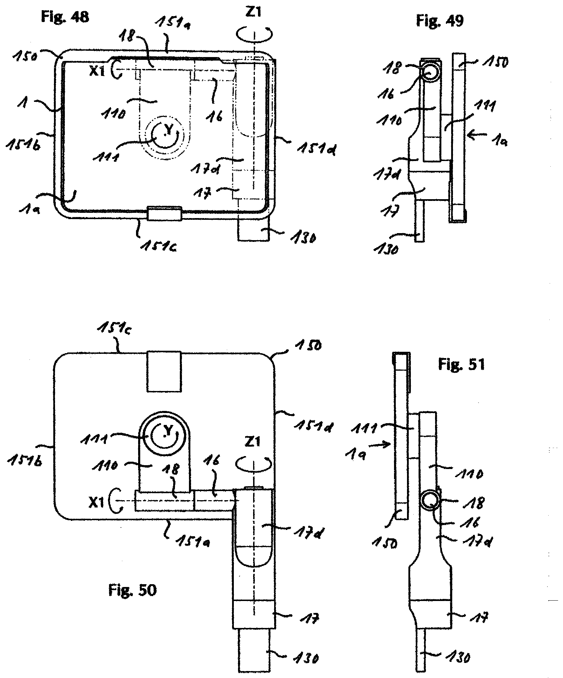

Figuren 48 bis 51 zeigen die Vorrichtung gemäss Darstellungen in den Fig. 38 bis 43 mit der Anordnung des Stützelements 17d mit dem ersten Drehgelenk 17 und dem Steckelement 130, dem Schwenkarm 16 mit dem zweiten Drehgelenk 18 sowie dem Stützarm110 mit dem dritten Drehlager 111 in Bezug auf die Längskanten 151a, 151c und die Querkanten 151b, 151d des Halters 150, mit dem Halter in vertikal nach unten gerichteter Stellung (Fig. 48 und 49) und vertikal nach oben gerichteter Stellung (Fig. 50 und 51).

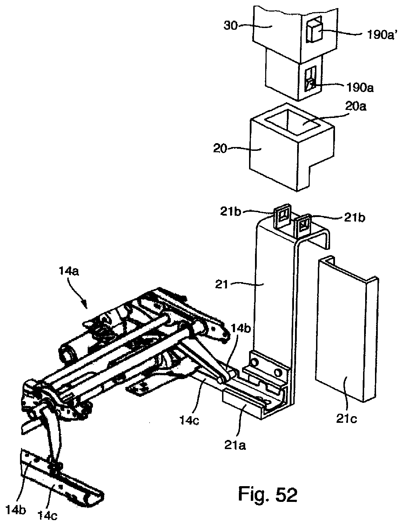

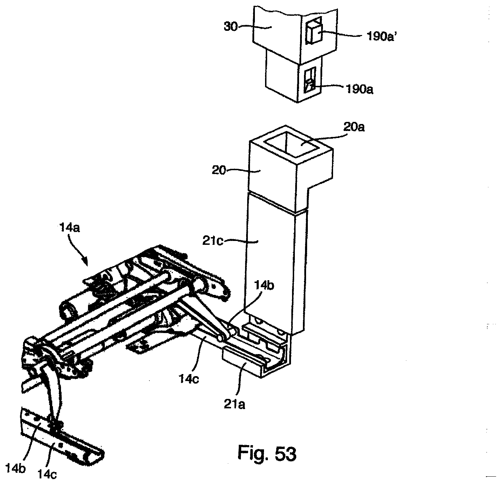

Fig. 52 und 53 zeigen eine alternative Befestigungseinrichtung mit der die Vorrichtung in einem Fahrzeug befestigt werden kann. Die Befestigungseinrichtung umfasst eine in etwa vertikal zwischen der Mittelkonsole und dem Fahrzeugsitz (nicht dargestellt) angeordnete Stütze 21 die am unteren Ende mit einem Befestigungselement 21a am vorderen Ende einer am Fahrzeugboden angeordneten Führungsschiene 14c, in der das Sitzgestell 14a des Fahrzeugsitzes mit einem Schlitten 14b verschiebbar gelagert wird, mit einer Schraubverbindung lösbar befestigt ist.

Die Stütze 21 ist aus einem Metallblech gefertigt und am unteren Ende mit einer Schraubverbindung am Befestigungselement 21a, welches die Führungsschiene 14c U-förmig untergreift, festgemacht. Am oberen Ende ist die Stütze 21 U-förmig abgebogen. Auf der Oberseite sind zwei Laschen aus dem Blech ausgeklinkt welche die Gegenhaken 21b für die Rasthaken 190a des Steckelements 30 bilden.

Die Aufnahmebuchse 20 ist aus Kunststoff gefertigt und mit einer Schraubverbindung (nicht dargestellt) am oberen Ende der Stütze 21 befestigt. Die Stütze 21 wird mit einer Abdeckblende 21c abgedeckt.

Das Steckelement 20 kann von oben in die Aufnahmebuchse 20 soweit eingesteckt werden bis die Rasthaken 190a in den Gegenhaken 21b einrasten. Das Lösen der Verriegelung erfolgt durch Drücken der Lösetasten 190a' am Steckelement 30.

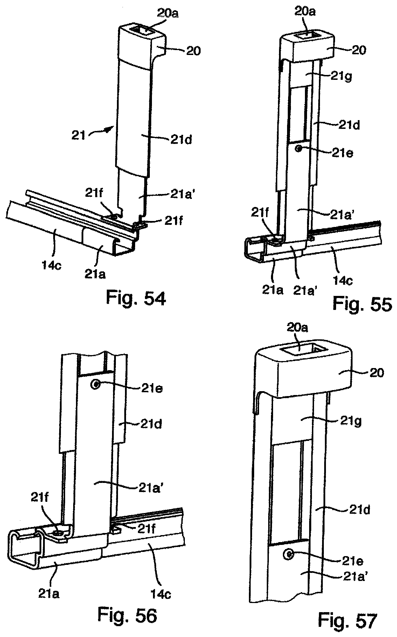

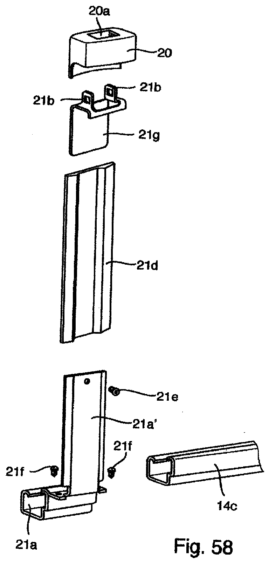

Fig. 54 bis 58 zeigen eine weitere Variante der Befestigungseinrichtung. Die Stütze 21 umfasst eine Profilschiene 21d mit C-förmigem Querschnitt und in Querrichtung gewölbter Breitseite, so dass eine hohe Stabilität der Stütze erreicht und eine Beschädigung der Polsterung des Fahrzeugsitzes beim Verschieben des Sitzes verhindert wird.

Die Profilschiene ist an beiden Enden offen, so dass am oberen Ende das Verriegelungsblech 21g mit den beiden ausgeklinkten Gegenhaken 21b in die Schiene eingeführt und in der Schiene eingepresst werden kann.

Das Befestigungselement 21a ist als C-förmiges Blechteil ausgebildet und umschliesst die Führungsschiene 14c von unten. Zur Montage kann das Befestigungselement 21a von vorne auf das freistehende Ende der Führungsschiene 14c aufgeschoben werden.

Auf der gegen die Mittelkonsole15 gerichteten Seite ist das Befestigungselement

21a rechtwinklig in Richtung gegen die Mittelkonsole 15 abgebogen und bildet eine horizontal ausgerichtete Plattform, auf der ein rechtwinklig abgebogener Fuss 21a" am unter Ende einer Führungsschiene 21a'mit zwei Spannschrauben 21f befestigt wird.

Der Fuss 21a" steht über die Plattform des Befestigungselements 21a hinaus und drückt auf die Oberseite der Führungsschiene 14c so dass beim Festziehen der Spannschrauben 21f das Befestigungselement 21a an der Führungsschiene 14 festgeklemmt wird.

Die Führungsschiene 21a' ragt vertikal nach oben und kann in die untere Öffnung der Profilschiene 21d eingeführt werden. Die Profilschiene 21d ist auf der Führungsschiene 21a' linear verschiebbar geführt, so dass die gewünschte Höhe der Aufnahmebuchse eingestellt und mit der Feststellschraube 21e fixiert werden kann.

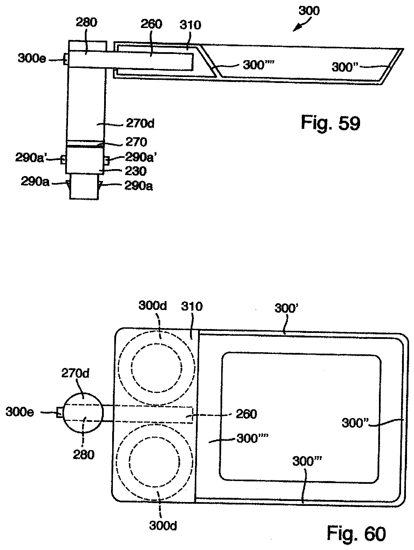

Fig. 59 bis 68 zeigen eine weitere Ausführungsform der Vorrichtung mit einem plattenförmigen rechteckigen Träger 300. Der Grundaufbau des Stützelements 270d mit dem am unteren Ende angeordneten ersten Drehgelenk 270 und dem Steckelement 230 mit den beiden Rasthaken 290a und den beiden Lösetasten 290a' sowie dem am oberen Ende angeordneten Schwenkarm 260 entsprechen den vorgängigen beschriebenen Konzepten auf die verwiesen wird. Wie auch bei diesen beschriebenen Konzepten stehen die Drehachsen des ersten Drehgelenks 270 und des zweiten Drehgelenks 280 senkrecht zueinander.

Am Schwenkarm 260 ist ein Träger 300 angeordnet wobei die Drehachse des zweiten Drehgelenks 280 parallel zu den Längskanten 300',300''' des Trägers 300 und mittig zwischen diesen verläuft.

An dem gegen das Stützelement 270d gerichteten Ende des Trägers 300 ist ein Aufnahmeraum 310 vorgesehen in dem mittig der Schwenkarm 260 angeordnet ist.

Das zweite Drehgelenk 280 kann zwischen dem Schwenkarm 260 und dem Stützelement 270d oder zwischen dem Schwenkarm 260 und dem Träger 300 oder innerhalb eines zweiteiligen Schwenkarms 260 angeordnet sein.

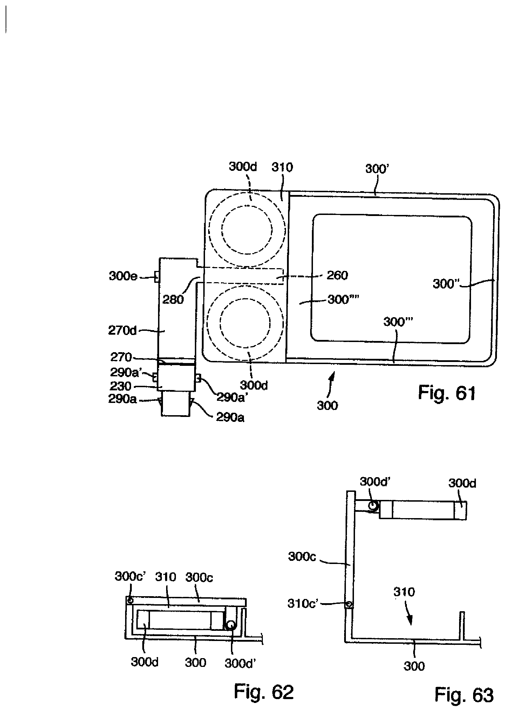

Der Träger 300 ist um das zweite Drehgelenk 280 um 360° drehbar, wobei eine (nicht dargestellte) Rastvorrichtung vorgesehen ist, mit welcher der Träger 300 in den vertikalen Nichtgebrauchsstellungen (Fig. 61) und in der horizontalen Gebrauchsstellung (Fig. 59 und 60) blockiert wird. Zum Lösen der Verriegelung ist eine Lösetaste 300 e vorgesehen.

Im Aufnahmeraum 310 sind auf beiden Seiten des Schwenkarms 260 Hohlräume vorgesehen in denen je ein ausklappbarer Cup-Holder angeordnet ist. Die Cup-Holder umfassen eine über ein erstes Gelenk 310c' 90°ausklappbar mit dem Träger 300 verbundene Abdeckung 300c sowie einen über ein zweites Gelenk 300d' 90° ausklappbar mit der Abdeckung 300c verbundenen Stützring 300d, wobei die Drehachsen des ersten Drehgelenks 310c' und des zweiten Drehgelenks 300d' parallel ausgerichtet sind.

Bei Nichtgebrauch der Cup-Holders liegen die Abdeckungen 300c sowie die Stützringe 300d parallel zur Breitseite des Trägers 300 zusammengeklappt übereinander in den Hohlräumen des Aufnahmeraums 310 (Fig. 62).

In der Gebrauchsstellung stehen die Abdeckungen 300c senkrecht zur Breitseite des Trägers 300 nach oben und die Stützringe 300d sind parallel zur Breitseite des Trägers 300 und beabstandet von dieser ausgerichtet (Fig. 63).

Anschliessend an den Aufnahmeraum 310 ist der Träger schalenförmig ausgebildet und mit einem umlaufenden nach aussen geneigten Rand 300', 300", 300''', 300"" versehen, dessen oberen Kanten mit den geschlossenen Abdeckungen 300c fluchten (Fig. 59).

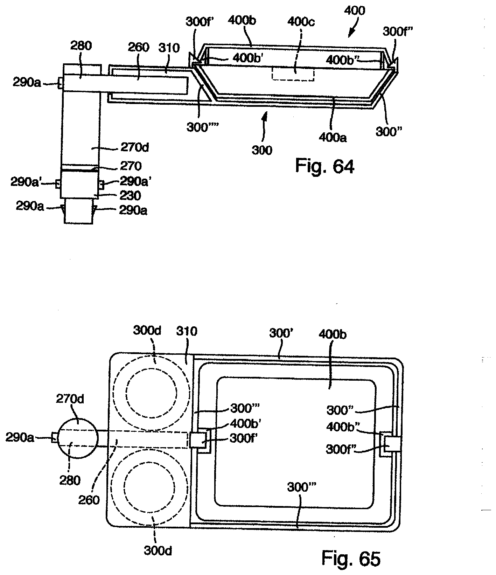

An den Seitenwänden 300" und 300"" des Trägers 300 sind mittig Halteklammern 300f', 300f" angeordnet mit denen ein Behälter 400 mit einer Aufnahmeschale 400a und einem an der Aufnahmeschale 400a mit einem Filmscharnier angelenkten Deckel 400b am Träger 300 lösbar befestigt werden kann (Fig. 64 und 65).

Die Aussenkontur der Aufnahmeschale 400a ist komplementär zur schalenförmigen Innenform des Trägers 300, 300', 300", 300''', 300"" gestaltet, so dass der Behälter 400 seitlich abgestützt ist, wenn er mit den Halteklammern 300f', 300f" am Träger 300 befestigt ist.

Der Deckel 400b kann mit einer Verschlussklammer 400c lösbar mit der Aufnahmeschale 400a verriegelt werden.

An den Schmalseiten des Deckels 400b sind mittig angeordnete Ausnehmungen 400b', 400b" vorgesehen, so dass die Halteklammern 300f', 300f" lediglich die Aufnahmeschale 400a am Träger 300 festhalten, der Deckel 400b des Behälters 400 aber geöffnet und über die Verschlussklammer 400c separat mit der Aufnahmeschale 400a verriegelt werden kann.

Zum Entfernen des Behälters 400 vom Träger 300 können die Halteklammern 300f',300f" soweit nach aussen bewegt werden bis der Behälter 400 vom Träger 300 abgenommen werden kann.

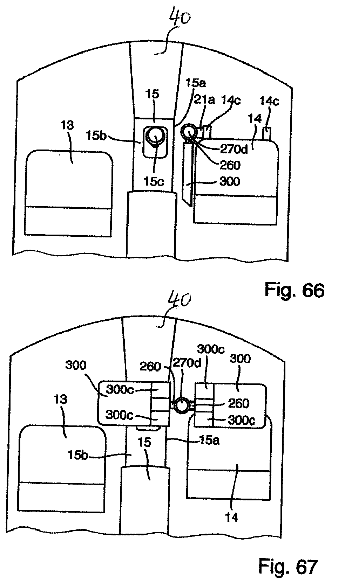

Figur 66 zeigt die Vorrichtung in der Nichtgebrauchsstellung befestigt mit dem Befestigungselement 21a am vorderen Ende der nahe der Mittelkonsole 15 angeordneten Führungsschiene 14c für den Beifahrersitz 14 wie in den Figuren 52 bis 58 gezeigt und beschrieben.

In der vertikalen Nichtgebrauchsstellung kann der Träger 300 um das zweite Drehgelenk 280 um 90° in eine horizontale Gebrauchsstellung gedreht und um das erste Drehgelenk 270 180° gegen den Fahrersitz 13 oder den Beifahrersitz 14 geschwenkt werden.

Fig. 67 zeigt zwei Gebrauchsstellungen des Trägers 300, über der Mittelkonsole 15 für die Benutzung durch den Fahrer und über dem Beifahrersitz 14 für die Benutzung durch den Beifahrer.

Bei Nichtgebrauch kann der Träger 300 durch Lösen der Rasthaken 290a mit den Lösetasten 290a' von der Aufnahmebuchse 20 (Fig. 53) getrennt und das Stützelement 270d zur platzsparenden Aufbewahrung am zweiten Drehgelenk 280 parallel zu den Breitseiten des Trägers 300 ausgerichtet und verriegelt werden (Fig. 61).

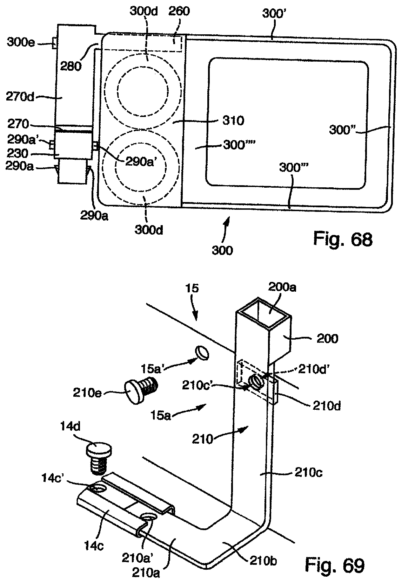

Fig. 68 zeigt eine alternative Anordnung des Schwenkarms 260 am Träger 300. Statt mittig zwischen den beiden Cup-Holdern 300d ist der Schwenkarm 260 nahe des äusseren Randes 300' im Aufnahmeraum 310 angeordnet. Im Übrigen entspricht die Ausführungsform den Darstellungen in den Fig. 59 bis 67 und ist mit identischen Bezugszeichen versehen.

Fig. 69 zeigt eine weitere Variante der Befestigungseinrichtung. Die Stütze 210 ist einteilig aus einem Stanz-/Biegeteil aus stabilem Metallblech gefertigt und umfasst ein L-förmiges Befestigungselement mit den Abschnitten 210a, 210b sowie einen am Ende des Abschnitts 210b in etwa rechtwinklig nach oben abgebogenes Stützabschnitt 210c, wobei die Breitseiten der Abschnitte 210a, 210b in etwa parallel zum Fahrzeugboden und die Breitseite des Stützabschnitts 210c in etwa parallel zur Seitenwand 15a der Mittelkonsole 15 verlaufen. Am oberen Ende des Stützabschnitts 210c ist die oben offene Aufnahmebuchse 200 befestigt.

Das freie Ende des Abschnitts 210a wird von vorne in die C-förmige Führungsschiene 14c des Beifahrersitzes 14 soweit eingeführt, dass das am Abschnitt 210a angeordnete Schraubloch 210a' und das an der Führungsschiene 14c angeordnete Schraubloch 14c' kongruent übereinander liegen. Die Stütze 210 und die Führungsschiene 14c werden dann mit der für die Befestigung der Führungsschiene 14c fahrzeugseitig bereits vorhandenen Schraube 14d gemeinsam am Fahrzeugboden fest geschraubt ohne dass zusätzliche Bauteile erforderlich sind.

Der Stützabschnitt 210c ist mit leichter Vorspannung gegen die Seitenwand 15a der Mittelkonsole 15 vorgespannt und stützt sich mit dem am oberen Ende angeordneten Gummi-Pad 210d an der Seitenwand 15a der Mittelkonsole 15 ab so dass Vibrationen der Stütze 210 und den an ihr befestigten Vorrichtungen 1, 300 verhindert werden.

Zur Verbesserung der Stabilität der Stütze 210 ist eine Schraube 210e vorgesehen mit der der Stützabschnitt 210c auf Höhe des Gummi-Pads 210d an der Seitenwand 15a der Mittelkonsole 15 festgeschraubt werden kann.

Dazu sind am Stützabschnitt 210c sowie am Gummi-Pad 210d sowie an der Seitenwand 15a entsprechende Bohrungen 210c', 210d', 15a' vorgesehen, die kongruent übereinanderliegen, wenn die Stütze 210 in die Führungsschiene 14c eingeführt und mit der Schraube 14d befestigt worden ist.

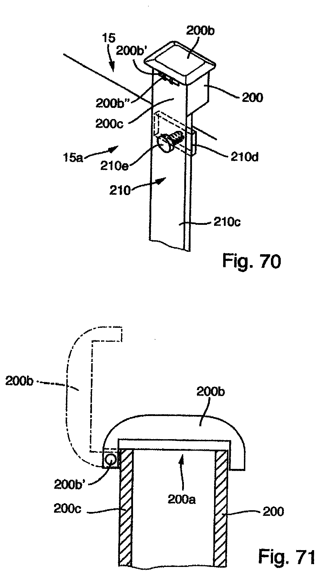

Fig. 70 und 71 zeigen einen Klappdeckel 200b zum Verschliessen der Einstecköffnung 20a, 200a der Aufnahmebuchse 20, 200 in der Schliessposition.

Der Klappdeckel 200b ist vorzugsweise an der gegen den Beifahrersitz 14 gerichteten breiten Seitenwand 200c der Aufnahmebuchse 200 mit einem Gelenk 200b' mit horizontal ausgerichteter Drehachse angelenkt und mit der Schenkelfeder 200b" in die Schliessstellung vorgespannt, in der er die Aufnahmebuchse 200 überdeckt. Zur Vermeidung von Verletzungen der Passagiere bei einem Unfall ist der Klappdeckel 200b auf seiner Aussenseite vorzugsweise rundum mit grossen Sicherheitsradien versehen.

Wenn das Steckelement 30, 230 in die Aufnahmebuchse 200 eingesteckt ist wird der Klappdeckel 200b mit der Schenkelfeder 200b" gegen die Breitseite des Steckelements 30, 230 gedrückt wobei die Lösetasten 190a', 290a' zum Lösen der Verriegelung 190a, 290a (Fig. 53) frei zugänglich bleiben.

Wenn das Steckelement 30, 230 aus der Aufnahmebuchse 200 herausgezogen wird verschliesst der federbeaufschlagte Klappdeckel 200b automatisch die Einstecköffnung 20a, 200a der Aufnahmebuchse 20, 200, so dass diese vor Verschmutzung geschützt ist.

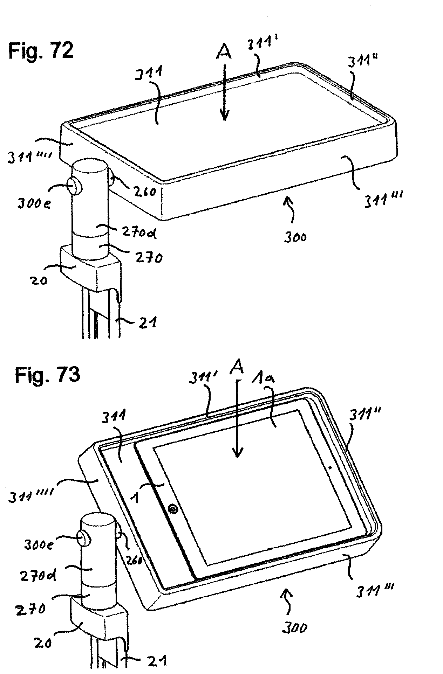

Die Fig. 72 bis Fig. 77 zeigen eine weitere Ausführungsform der Vorrichtung mit einem um das zweite Drehgelenk 280 360° drehbar angeordneten Träger 300, der beidseitig benutzbar ist. Dabei ist die eine Breitseite des Trägers (gekennzeichnet A) als Tischplatte ausgebildet und die andere Breitseite des Trägers (gekennzeichnet B) mit zwei Cup-Holdern und einer Ablageschale versehen.

Die Ausbildung der Seite B entspricht im Prinzip der Beschreibung der Darstellungen in den Fig. 59 bis Fig. 67, auf die verwiesen wird. Aus diesem Grund werden auch die entsprechenden Bezugszeichen von den Fig. 59 bis Fig. 67 verwendet.

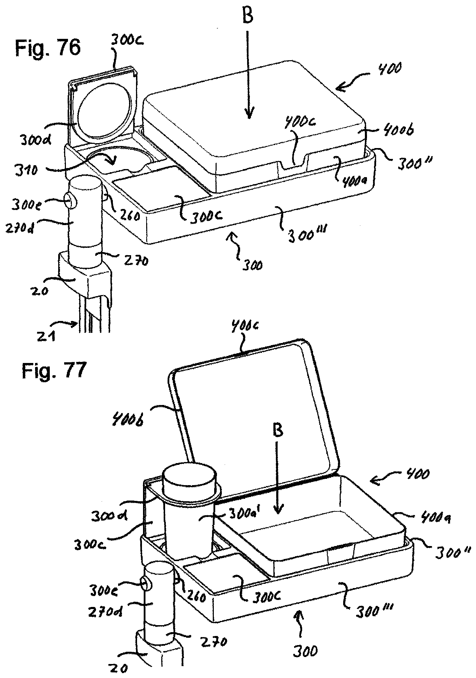

Ergänzend sind in den Fig. 77 bis Fig. 79 Becher 300a' in den Stützringen 300d der Cup-Holder sowie eine gemeinsame Fingermulde 300c' zum Erfassen der Abdeckungen 300c eingefügt.

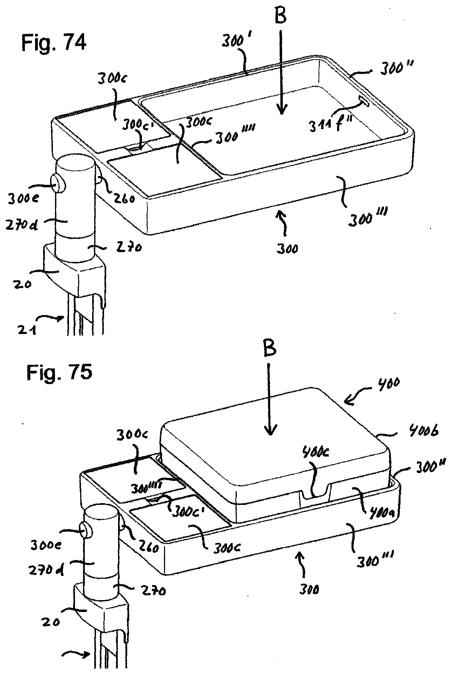

Anstelle der in den Fig. 64 und Fig. 65 gezeigten Klammern 300f' und 300f" zum Festhalten der Aufnahmeschale 400a des Behälters 400 am Träger 300 sind in den Fig. 74, 78 und 79 Haltenasen 311f', 311f" am Träger 300 angebracht die in entsprechend angeordnete Haltenasen (nicht dargestellte) an der Aufnahmeschale 400a einschnappen.

Die in den Fig. 72 bis Fig. 77 gezeigte Befestigungseinrichtung entspricht im Prinzip der Beschreibung der Darstellungen in den Fig. 54 bis 58 auf die verwiesen wird. Aus diesem Grund werden auch die entsprechenden Bezugszeichen von den Fig. 54 bis 58 verwendet.

Die Seite A des Trägers 300 umfasst eine flache Tischplatte 311 die mit einem rutschfesten Belag sowie ein umlaufender Rand 311', 311", 311''', 311'''' versehen ist, der verhindert dass Gegenstände wie z.B. Tablet-Computer 1 oder Mobiltelefone 1' bei geneigtem Träger 300 oder seitlichen Beschleunigungen von der Tischplatte 311 fallen können.

Der Träger 300 lässt sich um das erste Drehgelenk 270 in einer horizontalen Ebene stufenlos drehen und um das zweite Drehgelenk 280 stufenlos neigen so dass bspw. der Bildschirm 1a eines am Träger 300 angebrachten Tablet-Computers 1 oder Mobiltelefons 1' stufenlos auf den Benutzer ausgerichtet werden kann.

Der Träger 300 lässt sich am zweiten Drehgelenk 280 (Fig. 59 bis Fig. 65) um 360° drehen und kann in den beiden horizontalen Gebrauchsstellungen sowie den beiden vertikalen Nichtgebrauchsstellungen des Trägers 300 mit einer Rastvorrichtung (bspw. einer gefederten Stirnverzahnung) verriegelt werden. Die Verriegelung lässt sich mit der Lösetaste 300e entriegeln.

Zudem ist eine Friktionsbremse vorgesehen, welche den Träger 300 in den Zwischenstellungen durch Reibung fixiert.

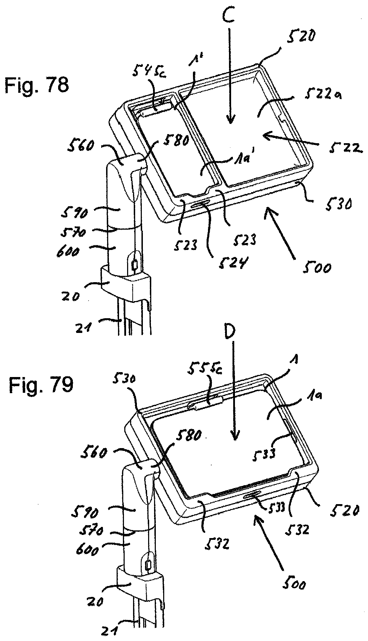

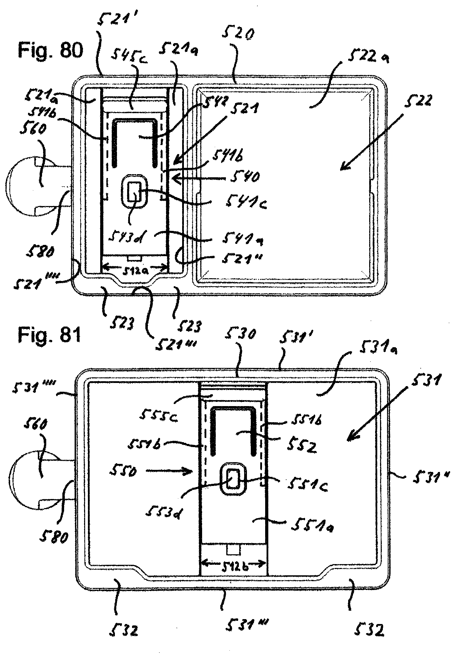

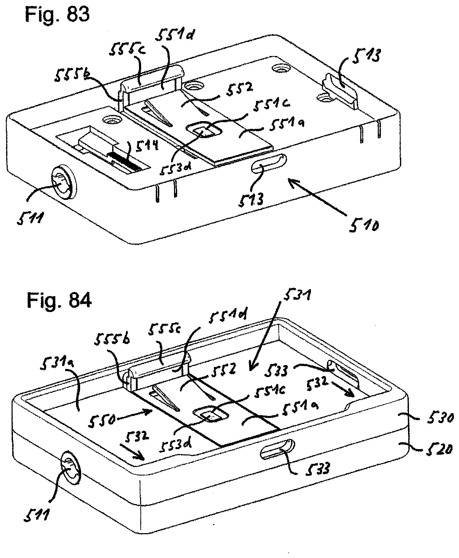

Fig. 78 bis Fig. 86 zeigen eine weitere Ausführungsform der Vorrichtung mit einem an der Stirnseite 511a mittig am Schwenkarm 560 angeordneten um das zweite Drehgelenk 580 360° drehbar gelagerten Träger 500 der auf einer Breitseite (C) eine erste Aufnahmeschale 521 mit eine mittig in der ersten Aufnahmeschale 521 angeordneten Halterung 540 für ein Mobiltelefon 1' sowie eine an die erste Aufnahmeschale 521 angrenzende Ablageschale 522 und auf der anderen Breitseite (D) eine zweite Aufnahmeschale 531 mit einem mittig in der zweiten Aufnahmeschale 531 angeordneten Halterung 550 für einen Tablet-Computer 1 umfasst.

Der Träger 500 umfasst eine Trägerplatte 510 mit einer Bodenwand 510a mit zwei parallel zur Schmalseite des Trägers 500 ausgerichteten Schieberführungen 512a, 512b für die beiden Schieber 541, 551 der beiden Halterungen 540, 550 und eine in der Mitte der Stirnseite 511a angeordnete Lagerbuchse 511 zur Aufnahme des Schwenkarms 560 sowie eine erste Gehäuseschale 520 und eine zweite Gehäuseschale 530, welche auf die obere respektive untere Breitseite der Trägerplatte 510 aufgesetzt werden und mit entsprechenden Ausnehmungen für die beiden Halterungen 540, 550 versehen sind.

Die erste Gehäuseschale 520 umfasst die erste Aufnahmeschale 521 zur Aufnahme der Halterung 540 für ein Mobiltelefon 1' sowie die Ablageschale 522 und die zweite Gehäuseschale 530 umfasst die zweite Aufnahmeschale 531 zur Aufnahme der Halterung 550 für einen Tablet-Computer 1.

An der Seitenwand 521''' der ersten Aufnahmeschale 521 und an der Seitenwand 531''' der zweiten Aufnahmeschale 531 sind U-förmige Aufnahmetaschen 523, 532 vorgesehen welche den Rand der Geräte (Mobiltelefon 1' respektive Tablet-Computer 1) auf einer Seite umgreifen.

Zum Festhalten der Geräte 1,1' am gegenüberliegenden Rand sind in den Aufnahmeschalen 521, 531 angeordnete Halterungen 540, 550 vorgesehen die einen Schieber 541, 551 mit einer Anschlagplatte (541d, 551d) umfassen der durch Verschieben an unterschiedliche Abmessungen der Geräte 1, 1' angepasst und in den jeweiligen Positionen lösbar fixiert werden kann.

Am Schieber 541, 551 ist eine Halteklammer 545, 555 mit einem Niederhalter 545c, 555c beweglich angeordnet und mit einer Feder 555d in Richtung gegen das Gerät 1, 1' vorgespannt und soweit beweglich, dass der Niederhalter 545c, 555c den Rand des Geräts 1, 1' überdeckt.

Die kurzen Seitenwände 521", 521'''' der ersten Aufnahmeschale 521 in der die Halterung 540 für ein Mobiltelefon 1' angeordnet ist sowie die kurzen Seitenwände 531", 531'''' der zweiten Aufnahmeschale 531 in der die Halterung 550 für einen Tablet-Computer (1) angeordnet ist bilden seitlich Anschläge für die in den Halterungen 540, 550 eingesetzten Geräte 1, 1', so dass diese nicht seitlich aus den Halterungen 540, 550 rutschen können.

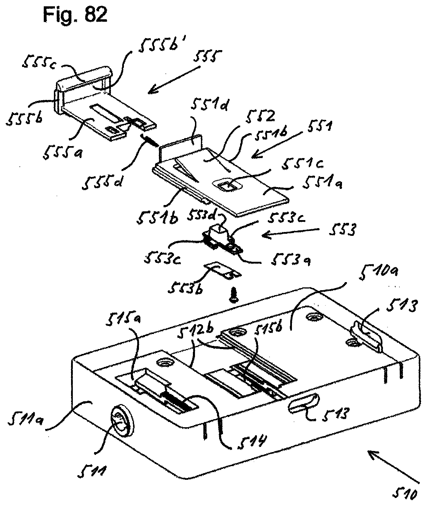

Die Halterung 540 für ein Mobiltelefon 1' und die Halterung 550 für einen Tablet-Computer 1 sind baugleich unter Verwendung identischer Teile und werden nachfolgend anhand der Darstellungen der Halterung 550 für einen Tablet-Computer 1 in Fig. 82 detailliert beschrieben.

Die Halterung 550 umfasst einen Schieber 551 mit einer Bodenplatte 551a und einer am Ende der Bodenplatte 551a in etwa senkrecht zur Bodenplatte 551a angeordnete Anschlagplatte 551d.

An den Seitenkanten der Bodenplatte 551a sind Führungsschienen 551b angebracht die in den Schieberführungen 512b der Bodenwand 510a der Trägerplatte 510a geführt sind und mit diesen eine Linearführung für den Schieber 551 bilden.

Auf der Unterseite der Bodenplatte 551a ist ein Verriegelungselement 553 angeordnet welches über einen durch eine Rastfeder 553b unterstützten Federarm 553a mit einer Schraube an der Bodenplatte 551a befestigt ist. An der Bodenwand 510a ist eine Ausnehmung 515b für das Verriegelungselement 553 vorgesehen so dass der Schieber 551 ungehindert verschoben werden kann.

Am freien Ende des Federarms 553a ist eine durch eine Tastenausnehmung 551c in der Bodenplatte 551a ragende Lösetaste 553d mit beidseitig angeordneten Zahnsegmenten 553c angebracht, die mit der Rastfeder 553b im Eingriff mit zwei auf der Unterseite der Bodenwand 510a angeordneten Zahnschienen 514 gehalten werden und den Schieber 551 in den gewünschten Positionen festhalten. Zum Verschieben des Schiebers 551 muss die Lösetaste 553d gedrückt werden wodurch sich die Zahnsegment 553c aus den Zahnschienen 514 lösen.

Die Zahnsegmente 553c und die Zahnschienen 514 sind mit sägezahnförmigen Verzahnungen versehen die bewirken dass der Schieber 551 ohne Betätigung der Lösetaste 553d in Richtung gegen ein in die Halterung 550 eingesetztes Gerät 1 geschoben werden kann bis die Anschlagsplatte 551d die Stirnwand des Geräts 1 berührt, während ein Verschieben des Schiebers 551 in die Gegenrichtung erst nach betätigen der Lösetaste 553d möglich ist.

Am Schieber 551 ist eine Halteklammer 555 angeordnet mit einer Bodenplatte 555a die an der Bodenplatte 551a des Schiebers 551 längsverschiebbar gelagert ist. Am freien Ende der Bodenplatte 555a ist eine in etwa senkrecht zur Bodenplatte 555a ausgerichtete Anschlagwand 555b mit einem in etwa parallel zur Bodenplatte 555a ausgerichteten und gegen den Schieber 551 weisenden Niederhalter 555c angeordnet.

Zwischen dem Schieber 551 und der Halteklammer 555 ist eine Zugfeder 555d angeordnet welche die Halteklammer 555 soweit gegen den Schieber 551 zieht bis die Anschlagwand 555b der Halteklammer 555 an der Anschlagplatte 551d des Schiebers 551 ansteht. An der Anschlagwand 555b ist eine Vertiefung 555b' vorgesehen in der die Anschlagplatte 551d des Schiebers 551 aufgenommen wird.

Der Niederhalter 555c ragt über die Anschlagplatte 551d hinaus und überdeckt den Rand eines in die Halterung 550 eingesetzten Geräts 1 ausserhalb des Bildschirms 1a, so dass das Gerät 1 nicht aus der Halterung 550 fallen kann.

Zur Entnahme des Geräts 1 aus der Halterung 550 muss die Halteklammer 555 gegen die Kraft der Zugfeder 555d soweit nach aussen gezogen werden bis das Gerät 1 frei ist und aus der Halterung 550 gehoben werden kann.

Auf der Oberseite der Bodenplatte 551a ist eine Hebevorrichtung 552 angebracht welche das Gerät 1 nach dem Öffnen der Halteklammer 555 soweit anhebt dass es bequem aus dem Schieber 551 entnommen werden kann.

An den Seitenwänden von Trägerplatte 510 und Gehäuseschalen 520, 530 sind Steckeröffnungen 513, 524, 533 vorgesehen.

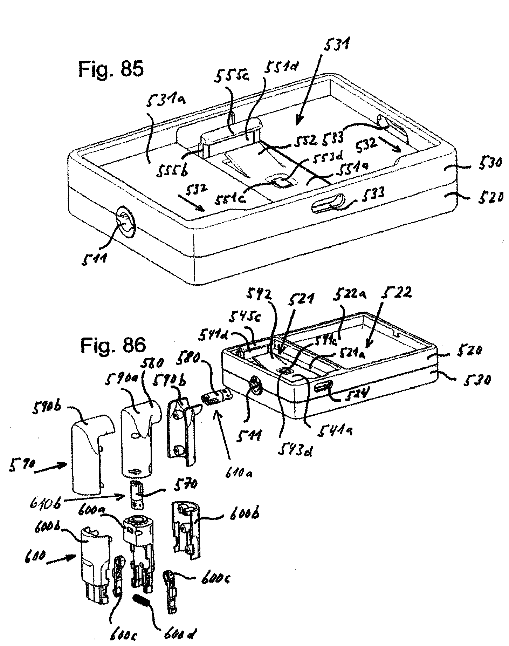

Das Stützelement 590 und der Schwenkarm 560 bilden eine gemeinsame Baugruppe mit einem L-förmigen Trägerteil 590a und zwei symmetrischen Gehäuseschalen 590b. Zwischen dem Trägerteil 590a und der Lagerbuchse 511 des Trägers 500 ist ein zylindrisches Verbindungsstück 610a eingesetzt, welches das zweite Drehgelenk 580 sowie eine Friktionsbremse umfasst (Fig. 86).

Das Steckelement 600 umfasst ein Trägerteil 600a in dem die beiden Verriegelungsarme 600c gelagert und eine Druckfeder welche die Verriegelungsarme 600c auseinander drückt untergebracht sind sowie zwei Gehäuseschalen 600b. Zwischen dem Stützelement 590 und dem Steckelement 600 ist ein zylindrisches Verbindungsstück 610b eingesetzt, welches das erste Drehgelenk 570 sowie eine Friktionsbremse umfasst (Fig. 86).

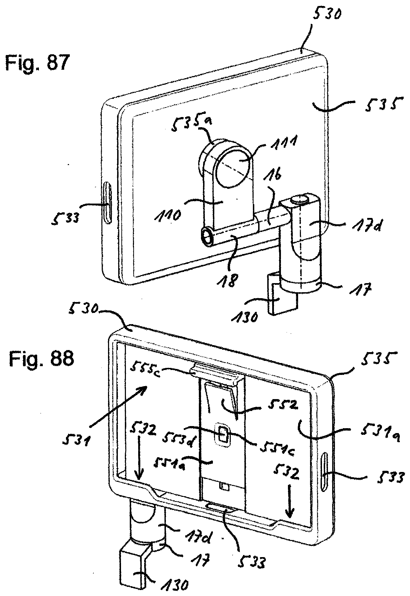

Fig. 87 und 88 zeigen eine weitere Ausführungsform der Vorrichtung mit der zweiten Gehäuseschale 530 mit einer in der zweiten Aufnahmeschale 531 angordneten Halterung 550 für unterschiedlich grosse Tablet-Computer 1, kombiniert mit einer flachen mit einem Drehgelenk 535a versehenen Rückwand 535, angebracht an einer Überführungsanordnung (6, 7, 8, 10, 11, 16, 17, 18, 110, 111, 160, 170, 180, 560, 570, 580, 590) gemäss Darstellung in Fig. 15 und Fig. 16 auf deren Beschreibung verwiesen wird.

## Patentansprüche

1. Halter für flache in etwa rechteckige Geräte wie Tablet-Computer (1) oder Mobiltelefone (1') umfassend einen Träger (500) und eine mit dem Träger (500) verbundene U-förmige Aufnahmetasche (523, 532) die den Rand eines in den Halter eingesetzten Geräts (1, 1') auf einer Seite umgreift sowie eine mit dem Träger (500) beweglich verbundene federbeaufschlagte Halteklammer (545, 555) mit einem Niederhalter (545c, 555c) der den Rand des in den Halter eingesetzten Geräts (1, 1') auf der gegenüberliegenden Seite umgreift, **dadurch gekennzeichnet, dass** eine Halterung (540, 550) vorgesehen ist, mit einem am Träger (500) linear beweglich geführten und in unterschiedlichen Positionen arretierbaren Schieber (541, 551) und einer am Schieber (541, 551) angeordneten Anschlagplatte (541d, 551d) die durch Verschieben des Schiebers (541, 551) mit dem gegenüberliegenden Rand des Geräts (1, 1') in Anlage gebracht und in dieser Position mit dem Schieber (541, 551) arretiert werden kann, wobei die Halteklammer (545, 555) mit dem Niederhalter (545c, 555c) beweglich am Schieber (541, 551) angeordnet und mit einer Feder (555d) gegen die Anschlagplatte (541d, 551d) vorgespannt ist.

2. Halter nach Anspruch 1, wobei der Träger (500) eine Bodenwand (510a) umfasst an der Schieberführungen (512a, 512b) angeordnet sind in denen der Schieber (541, 551) geführt ist.

3. Halter nach Anspruch 2, wobei der Schieber (541, 551) eine Bodenplatte (541a, 551a) umfasst an der Führungsschienen (541b, 551b) angeordnet sind mit denen der Schieber (541, 551) in den Schieberführungen (512a, 512b) der Trägerplatte (510) geführt ist.

4. Halter nach Anspruch 3, wobei die Anschlagplatte (541d, 551d) am freien Ende der Bodenplatte (541a, 551a) des Schiebers (541, 551) in etwa senkrecht zur Bodenplatte (541a, 551a) angeordnet ist.

5. Halter nach einem der Ansprüche 1 bis 4, wobei die Halteklammer (545, 555) eine Bodenplatte (545a, 555a) umfasst die an der Bodenplatte (541a, 551a) des Schiebers (541, 551) längsverschiebbar gelagert ist.

6. Halter nach Anspruch 5, wobei am freien Ende der Bodenplatte (545a, 555a) der Halteklammer (545, 555) eine in etwa senkrecht zur Bodenplatte (545a, 555a) ausgerichtete Anschlagwand (545b, 555b) mit einem in etwa parallel zur Bodenplatte (545a, 555a) ausgerichteten und gegen den Schieber (541, 551) weisenden Niederhalter (545c, 555c) angeordnet ist.

7. Halter nach Anspruch 6, wobei eine Feder (545d, 555d) zwischen dem Schieber (541, 551) und der Halteklammer (545, 555) angeordnet ist und die Halteklammer (545, 555) soweit gegen den Schieber (541, 551) bewegt, bis die Anschlagwand (545b, 555b) der Halteklammer (545, 555) an der Anschlagplatte (541d, 551d) des Schiebers (541, 551) ansteht.

8. Halter nach Anspruch 6 oder 7, wobei an der Anschlagwand (545b, 555b) der Halteklammer (545, 555) eine Vertiefung (545b', 555b') vorgesehen ist in der die Anschlagplatte (541d, 551d) des Schiebers (541, 551) aufgenommen wird.

9. Halter nach einem der Ansprüche 6 bis 8, wobei der Niederhalter (545c, 555c) über die Anschlagplatte (541d, 551d) des Schiebers (541, 551) hinausragt und den Rand eines in die Halterung (540, 550) eingesetzten Geräts (1, 1') überdeckt, so dass Gerät (1, 1') nicht aus der Halterung (540, 550) fallen kann.

10. Halter nach einem der Ansprüche 1 bis 9, wobei zwischen dem Träger (500) und dem Schieber (541, 551) eine Verriegelungsvorrichtung (514, 553) angeordnet ist mit welcher der Schieber (541, 551) am Träger (500) arretiert werden kann.

11. Halter nach Anspruch 10, wobei eine Lösetaste (553d) zur Freigabe der Verriegelungsvorrichtung (514, 553) vorgesehen ist.

12. Halter nach Anspruch 10 oder 11, wobei die Verriegelungsvorrichtung (514, 553) eine am Träger (500) angeordnete Zahnschiene (514) und ein beweglich am Schieber (541, 551) angeordnetes Zahnsegment (553c) das mit einer Rastfeder (553b) in Eingriff mit der Zahnschiene (514) gehalten wird umfasst.

13. Halter nach Anspruch 12, wobei die Zahnschiene (514) und das Zahnsegment (553c) mit sägezahnförmigen Verzahnungen versehen sind, so dass der Schieber (541, 551) ohne Betätigung der Lösetaste (553d) in Richtung gegen das in die Halterung (540, 550) eingesetzte Gerät (1, 1') geschoben werden kann, während ein Verschieben des Schiebers (541, 551) in die Gegenrichtung erst nach betätigen der Lösetaste (553d) möglich ist.

14. Halter nach einem der Ansprüche 1 bis 13, wobei eine flache Rückwand (535) mit einem Drehlager (535a) vorgesehen ist, so dass der Halter zwischen einer Hochformatstellung und einer Querformatstellung drehbar ist.

## Claims

1. Device for retaining flat, approximately rectangular appliances such as tablet computers (1) or mobile telephones (1'), comprising a carrier (500) and a U-shaped receiving pocket (523, 532) which is connected to the carrier (500) and grips the edge on one side of an appliance (1, 1') inserted in the holding device, and a spring-loaded retaining clip (545, 555) which is movably connected to the carrier (500) and has a hold-down retainer (545c, 555c) which grips the edge on the opposite side of the appliance (1, 1') inserted in the device (1, 1'), **characterized in that** a holder (540, 550) is provided, having a slide (541, 551) which is guided so as to be linearly movable on the carrier (500) and lockable in various positions, and a stop plate (541d, 551d) which is arranged on the slide (541, 551) and by movement of the slide (541, 551) can be brought into contact with the opposite edge of the appliance (1, 1') and in this position can be locked to the slide (541, 551), wherein the retaining clip (545, 555) with the hold-down retainer (545c, 555c) is arranged movably on the slide (541, 551) and preloaded against the stop plate (541d, 551d) by means of a spring (555d).

2. Device according to claim 1, wherein the carrier (500) comprises a base wall (510a) on which slide guides (512a, 512b) that guide the slide (541, 551) are arranged.

3. Device according to claim 2, wherein the slide (541, 551) comprises a base plate (541a, 551a) on which guide rails (541b, 551b) are arranged, by means of which the slide (541, 551) is guided in the slide guides (512a, 512b) of the carrier plate (510).

4. Device according to claim 3, wherein the stop plate (541d, 551d) is arranged at the free end of the base plate (541a, 551a) of the slide (541, 551), approximately perpendicularly to the base plate (541a, 551a).

5. Device according to any of claims 1 to 4, wherein the retaining clip (545, 555) comprises a base plate (545a, 555a) which is mounted so as to be longitudinally displaceable on the base plate (541a, 551a) of the slide (541, 551).

6. Device according to claim 5, wherein at the free end of the base plate (545a, 555a) of the retaining clip (545, 555), a stop wall (545b, 555b) is arranged which is oriented approximately perpendicularly to the base plate (545a, 555b) and has a hold-down retainer (545c, 555c) that is oriented approximately parallel to the base plate (545a, 55a) and points towards the slide (541, 551).

7. Device according to claim 6, wherein a spring (545d, 555d) is arranged between the slide (541, 551) and the retaining clip (545, 555) and moves the retaining clip (545, 555) towards the slide (541, 551) so far until the stop wall (545b, 555b) of the retaining clip (545, 555) abuts on the stop plate (541d, 551d) of the slide (541, 551) .

8. Device according to claim 6 or 7, wherein on the stop wall (545b, 555b) of the retaining clip (545, 555), a recess (545b', 555b') is provided which receives the stop plate (541d, 551d) of the slide (541, 551).

9. Device according to any of claims 6 to 8, wherein the hold-down retainer (545c, 555c) protrudes beyond the stop plate (541d, 551d) of the slide (541, 551) and covers the edge of an appliance (1, 1') inserted in the holder (540, 550) so that the appliance (1, 1') cannot fall out of the holder (540, 550).

10. Device according to any of claims 1 to 9, wherein between the carrier (500) and the slide (541, 551), a locking device (514, 553) is arranged, by means of which the slide (541, 551) can be locked on the carrier (500).

11. Device according to claim 10, wherein a release button (553d) is provided for releasing the locking device (514, 553) .

12. Device according to claim 10 or 11, wherein the locking device (514, 553) comprises a toothed rail (514) arranged on the carrier (500) and a tooth segment (553c) which is arranged movably on the slide (541, 551) and is held in engagement with the toothed rail (514) by a latching spring (553b).

13. Device according to claim 12, wherein the toothed rail (514) and the tooth segment (553c) are provided with sawtooth-like toothing so that the slide (541, 551) can be pushed in the direction towards the appliance (1, 1') inserted in the holder (540, 550) without operation of the release button (553d), while a movement of the slide (541, 551) in the opposite direction is only possible after operation of the release button (553d).

14. Device according to any of claims 1 to 13, wherein a flat rear wall (535) is provided with a rotary bearing (535a) so that the device is rotatable between a portrait-format position and a landscape-format position.

## Revendications

1. Support pour appareils plats essentiellement rectangulaires, tels que des tablettes électroniques (1) ou des téléphones portables (1'), comprenant une console (500) et une poche de réception (523, 532) en forme de U, reliée à la console (500) et qui enserre sur un côté le bord d'un appareil (1, 1') inséré dans le support, ainsi qu'une pince de retenue (545, 555) à ressort reliée de manière mobile à la console (500) et munie d'un presse-feuilles (545c, 555c) qui enserre sur le côté opposé le bord de l'appareil (1, 1') inséré dans le support, **caractérisé en ce qu'**une fixation (540, 550) est prévue, avec un coulisseau (541, 551) guidé de manière linéairement mobile au niveau de la console (500) et pouvant être bloqué dans différentes positions et une plaque de butée (541d, 551d) agencée au niveau du coulisseau (541, 551) et qui peut être mise en place par déplacement du coulisseau (541, 551) avec le bord opposé de l'appareil (1, 1') et peut être bloquée dans ladite position avec le coulisseau (541, 551), dans lequel la pince de retenue (545, 555) munie du presse-feuilles (545c, 555c) est agencée mobile au niveau du coulisseau (541, 551) et est précontrainte contre la plaque de butée (541d, 551d) par un ressort (555d).

2. Support selon la revendication 1, dans lequel la console (500) comprend une paroi de fond (510a) au niveau de laquelle sont agencés des guides de coulisseau (512a, 512b) dans lesquels est guidé le coulisseau (541, 551).

3. Support selon la revendication 2, dans lequel le coulisseau (541, 551) comprend une plaque de fond (541a, 551a) au niveau de laquelle sont agencés des rails de guidage (541b, 551b) avec lesquels le coulisseau (541, 551) est guidé dans les guides de coulisseau (512a, 512b) de la plaque de console (510).

4. Support selon la revendication 3, dans lequel la plaque de butée (541d, 551d) est agencée au niveau de l'extrémité libre de la plaque de fond (541a, 551a) du coulisseau (541, 551) de manière essentiellement perpendiculaire à la plaque de fond (541a, 551a).

5. Support selon l'une quelconque des revendications 1 à 4, dans lequel la pince de retenue (545, 555) comprend une plaque de fond (545a, 555a) qui est installée au niveau de la plaque de fond (541a, 551a) du coulisseau (541, 551) de manière à pouvoir être déplacée longitudinalement.

6. Support selon la revendication 5, dans lequel une paroi de butée (545b, 555b) orientée de manière essentiellement perpendiculaire à la plaque de fond (545a, 555a) et munie d'un presse-feuilles (545c, 555c) orienté de manière essentiellement parallèle à la plaque de fond (545a, 555a) et tourné vers le coulisseau (541, 551) est agencée au niveau de l'extrémité libre de la plaque de fond (545a, 555a) de la pince de retenue (545, 555).

7. Support selon la revendication 6, dans lequel un ressort (545d, 555d) est agencé entre le coulisseau (541, 551) et la pince de retenue (545, 555) et la pince de retenue (545, 555) se déplace contre le coulisseau (541, 551) jusqu'à ce que la paroi de butée (545b, 555b) de la pince de retenue (545, 555) arrive au niveau de la plaque de butée (541d, 551d) du coulisseau (541, 551).

8. Support selon la revendication 6 ou 7, dans lequel un évidement (545b', 555b') accueillant la plaque de butée (541d, 551d) du coulisseau (541, 551) est prévu au niveau de la paroi de butée (545b, 555b) de la pince de retenue (545, 555).

9. Support selon l'une quelconque des revendications 6 à 8, dans lequel le presse-feuilles (545c, 555c) fait saillie au-delà de la plaque de butée (541d, 551d) du coulisseau (541, 551) et recouvre le bord d'un appareil (1, 1') inséré dans la fixation (540, 550) de sorte que l'appareil (1, 1') ne puisse pas tomber de la fixation (540, 550).

10. Support selon l'une quelconque des revendications 1 à 9, dans lequel un dispositif de verrouillage (514, 553) avec lequel le coulisseau (541, 551) peut être bloqué au niveau de la console (500) est agencé entre la console (500) et le coulisseau (541, 551).

11. Support selon la revendication 10, dans lequel un bouton de libération (553d) permettant de relâcher le dispositif de verrouillage (514, 553) est prévu.

12. Support selon la revendication 10 ou 11, dans lequel le dispositif de verrouillage (514, 553) comprend un rail denté (514) agencé au niveau de la console (500) et un segment denté (553c) agencé de manière mobile au niveau du coulisseau (541, 551) maintenu en prise avec le rail denté (514) par un ressort à cran d'arrêt (553b).

13. Support selon la revendication 12, dans lequel le rail denté (514) et le segment denté (553c) sont munis de dentures en forme de dents de scie, de sorte que le coulisseau (541, 551) peut être poussé vers l'appareil (1, 1') inséré dans la fixation (540, 550) sans actionnement du bouton de libération (553d) tandis qu'un déplacement du coulisseau (541, 551) dans le sens opposé n'est possible qu'après actionnement du bouton de libération (553d).

14. Support selon l'une quelconque des revendications 1 à 13, dans lequel une paroi arrière (535) plate munie d'un palier rotatif (535a) est prévue, de sorte que le support est rotatif entre une position portrait et une position paysage.
